(19) Europäisches Patentamt
European Patent Office
Office européen des brevets

(11) Publication number: **0 243 522 B1**

# (12) EUROPEAN PATENT SPECIFICATION

(45) Date of publication of the patent specification: **13.09.89**

(51) Int. Cl.⁴: **A01N 59/02,** C05G 3/02 // (A01N59/02, 47:28)

(21) Application number: **86105942.6**

(22) Date of filing: **30.04.86**

(54) **Systemic herbicidal compositions and methods of use.**

(43) Date of publication of application: **04.11.87 Bulletin 87/45**

(45) Publication of the grant of the patent: **13.09.89 Bulletin 89/37**

(84) Designated Contracting States: **AT BE CH DE FR GB IT LI LU NL SE**

(56) References cited:
**US-A- 3 705 794**
**US-A- 4 445 925**
**US-A- 4 522 644**

**CHEMICAL ABSTRACTS, vol. 83, no. 13, 29th September 1975, page 170, abstract no. 109660e, Columbus, Ohio, US; U. SUWUNNAMEK et al.: "Control of Cyperus rotundus with glyphosate. Influence of ammonium sulfate and other additives", & WEED RES. 1975, 15(1), 13-19rs, Bellingham, Washington, US; J.J. COWAN: "Blazed holographic gratings - formation by s 000**

**The file contains technical information submitted after the application was filed and not included in this specification**

(73) Proprietor: **UNION OIL COMPANY OF CALIFORNIA, 461 South Boylston Street, Los Angeles, CA 90017(US)**

(72) Inventor: **Young, Donald C., 245 Altura Drive, Fullerton California 92635(US)**

(74) Representative: **Jack, Bruce James et al, FORRESTER & BOEHMERT Widenmayerstrasse 4/I, D-8000 Munchen 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 243 522 B1

ACTORUM AG

## Description

### Technical Field

This invention relates to the field of herbicidal compositions, and particularly to compositions having contact herbicidal activity and accentuated systemic herbicidal activity, and to methods of using such compositions to control vegetation.

### Introduction

Both urea and sulfuric acid are widely used for a variety of purposes in numerous industries as fertilizers, soil adjuvants, chemical treating agents, chemical precursors and reactants. They are sometimes useful in combination, particularly in the agricultural industry, when the simultaneous addition of urea and sulfur to the soil is desired. Sulfuric acid is known to be phytotoxic, has been used as a postemergent, contact herbicide on a variety of plants, and is registered with the United States Environmental Protection Agency for the elimination of certain weed plants from plots of growing onions and garlic.

A variety of systemic herbicides are well known and are commercially available. Some of these such as Roundup®, the isopropylamine salt of N-(phosphonomethyl) glycine, are relatively broad spectrum in that they are active toward a wide variety of vegetation. Others are relatively limited spectrum of plant species. For instance, some systemics such as 2,4-dichlorophenoxyacetic acid, known as 2,4-D, can be used to preferentially control broadleafs in the presence of grasses. Others such as 2,2-dichloropropionic acid, known as Dalapon and by other names, selectively control grasses in the presence of broadleafs. Other types of selectivity are also available.

Systemic herbicides are those that are assimilated by susceptible vegetation and are then translocated to parts of the plant other than those contacted. The systemic herbicides generally, if not always, depend on such translocation for their activity. For instance, when applied to plant foliage, a systemic herbicide will be assimilated during transpiration, or otherwise, and transported throughout the entire plant so that it eliminates the undesired vegetation, roots and all.

Some systemic herbicides are effective only when applied to established, transpiring vegetation and are known as postemergent herbicides. Others that may or may not be active postemergents, are also effective preemergent herbicides. Preemergent herbicides are assimilated either by the plant seed prior to germination, and/or are stable in the soil environment and enter the cotyledon -- the first leaf, leaf pair, or whorl of leaves developed by the seed plant embryo -- and thereafter translocate to and destroy all parts of the germinating seed prior to or shortly after emergence. A variety of pre- and postemergent systemic herbicides are identified, and their chemical and herbicidal properties are disclosed, in the Farm Chemicals Handbook, published annually by Farm Chemicals Magazine, Meister Publishing Company, Willoughby, Ohio.

A number of investigators have studied the effects of combining systemic herbicides with certain contact herbicides (other than those described herein), and consistently have found that the systemic herbicide's activity is markedly reduced or is eliminated altogether when used in such combinations. Furthermore, all of the known systemic herbicides are complex organic compounds that are chemically unstable in the presence of relatively concentrated sulfuric acid. Therefore, they cannot be used in combinations in which the contract herbicidal activity or soil adjuvant properties of sulfuric acid might be desirable.

Yet other investigators have studied the effect of certain nitrogen fertilizers including ammonium sulfate, ammonium phosphate and urea on the herbicidal activity of certain systemic herbicides, such as ROUNDUP, and have reported that such fertilizers potentiate the activity of the systemic herbicides investigated. One such study is reported by Parker et al. in "Control of Cyperus rotundus with glyphosate: the influence of ammonium sulphate and other additives"; Weed Research, 15 (1), 1975, pp. 13–19.

Other problems associated with presently available systemic herbicidal compositions include their ecotoxicity, persistence in the environment, high cost of application at effective dosage rates, the lack of effective immediate vegetation control such as that available with contact herbicides, limited effectiveness on some more resistant forms of vegetation, and others. Accordingly, a need exists for improved systemic herbicidal compositions and methods of vegetation control capable of minimizing or eliminating these problems.

It is therefore a primary object of this invention to provide improved herbicidal compositions, solid compositions convertible to herbicidal compositions, and methods for the use of such compositions.

Another object of this invention is the provision of systemic herbicidal compositions with increased activity of the contained systemic herbicides.

Another object of this invention is the provision of herbicidal compositions and methods of their use which significantly reduce the amount of systemic herbicide required to control undesired vegetation, and thereby reduce the amount of systemic herbicide introduced into the environment.

Another object of this invention is the provision of compositions which exhibit both significant contact and systemic herbicidal activity and/or methods of their use.

Another object is the provision of compositions and methods for controlling undesired vegetation and simultaneously applying nutrient nitrogen and sulfur to the soil.

Another object is the provision of compositions containing significant amounts of sulfuric acid and one or more systemic herbicides that are chemically stable in the composition.

Other objects, aspects, and advantages of this invention will be apparent to one skilled in the art in view of the following disclosure, the drawings, and the appended claims.

SUMMARY

Briefly, the invention provides improved (1) liquid herbidical compositions, (2) solid compositions which dissolve in water to form such liquid herbicidal compositions, and (3) methods for the use of such herbicidal compositions.

The novel liquid herbicidal compositions are aqueous solutions of one or more chemically stable, pre- and/or postemergent systemic herbicides and a mixture of urea and sulfuric acid in which the molar ratio of urea to sulfuric acid is within the range of about 1/4 to about 7/4 so that at least about 25 weight percent of the sulfuric acid is present as the monourea-sulfuric acid adduct. The chemically stable, systemic herbicides (defined in more detail hereinafter) are those that are sufficiently stable in the presence of the urea-sulfuric acid mixtures to allow their use in the compositions and methods of this invention.

The novel solid compositions are solid mixtures of one or more pre- and/or postemergent, chemically stable, systemic herbicides and a combination of urea and sulfuric acid in which the molar ratio of urea to sulfuric acid is within the range of about 1/4 to about 7/4 so that at least about 25 weight percent of the sulfuric acid is present as the monourea-sulfuric acid adduct.

The liquid and solid compositions may also contain one or more surfactants chemically stable in the presence of the combination of urea and sulfuric acid. Surfactants improve both the foliage coverage by and the herbicidal activity of the aqueous solutions.

The method of the invention involves the application of the aforedescribed liquid or solid herbicidal compositions to vegetation and/or to the soil (when preemergent activity is desired) at dosage rates sufficient to control undesired vegetation, seeds, and/or unemerged seedlings.

The compositions and methods of this invention have surprisingly accentuated pre- and postemergent, systemic herbicidal activity with the result that significantly smaller dosages of a given herbicide may be applied to achieve the same degree of vegetation control or, alternatively, a higher degree of vegetation control is achieved with the same application rate. These compositions and methods also provide contact herbicidal properties and, at the same time, provide nitrogen and sulfur nutrients for the desired plants. They also enable the use of systemic herbicides in combination with relatively concentrated sulfuric acid.

The available contact herbicidal activity provides immediate vegetation control while the improved systemic herbicidal activity reduces treatment cost, improves vegetation control, reduces both immediate and residual toxic effects to humans, and reduces the possibility of herbicide residue on harvested food crops.

BRIEF DESCRIPTION OF THE DRAWING

This invention will be more readily understood by reference to the drawing, which is a ternary-phase diagram for the urea, sulfuric acid, and water system illustrating isotherms at several different temperatures, the existence of three prominent eutectics along these isotherms, and the boundaries of the compositions encompassed by and employed in the methods of this invention.

DETAILED DESCRIPTION OF THE INVENTION

This invention provides novel compositions with systemic herbicidal properties and methods for use of such compositions to control vegetation. The compositions can be either solid or liquid, and they contain one or more systemic herbicides, a combination of urea and sulfuric acid in which at least 25 percent of the sulfuric acid is present as the monourea-sulfuric acid adduct, and optionally a surfactant.

The compositions of this invention can be used for immediate and long-term, pre- and postemergent control of essentially any form of vegetation, particularly upon appropriate selection of the systemic herbicidal component or components. Immediate vegetation control by contact killing of more resistant plants may require higher concentrations and/or higher dosage rates of the monourea adduct. Longer term control can be achieved through the selection of a systemic component that is particularly active for the controlled plant species. Thus, these compositions can be used for both immediate and long term control of all varieties of vegetation including those usually found in agricultural fields such as bushes, scrub brush, vines, and other weeds.

Illustrative of vegetation that can be controlled by these methods, with or without the use of surfactants are: black mustard (brassica nigra), curly dock (rumex crispus), common groundsel (senecio vulgaris, pineapple weed (matricaria matricarioides), swamp smartweed (kelp, polygonum coccineum), prickly lettuce (lactuca scariola), lance-leaved groundcherry (physalis lanceifolia), annual sowthistle (sonchus oleraceus), London rocket (sisymbrium irio), common fiddleneck (amsinckia intermedia), hairy nightshade (solanum sarrachoides), shepherd's purse (capsella bursa-pastoris), sunflower (helianthus annuus), common knotweed (polygonum aviculare), green amaranth (amaranthus hybridus), mare's tail (conyza canadensis), henbit (lamium amplexicaule), cocklebur (xanthium strumarium), cheeseweed (malva parviflora), lambsquarters (chenopodium album), pucture vine (tribulus terrestris), common purslane (portulaca oleracea), prostrate spurge (euphorbia supina), telegraph plant (heterotheca grandiflora), carpetweed (mollugo verticillate), yellow starthistle (centaurea solstitialis), milk thistle (silybum marianum), mayweed (anthemis cotula), burning nettle (urtica urens), fathen (atriplex patula), chickweed (stellaria media), scarlet pimpernel (anagallis arvensis), redroot pigweed (amaranthus retroflexus), min-

nerslettuce (montia perfoliata), turkey mullein (eremocarpus setigerus), nettleleaf goosefoot (chenopodium murale), prostrate pigweed (amaranthus blitoides), silverleaf nightshade (solanum elaeagnifolium), hoary cress (cardaria draba), largeseed dodder (cuscuta indecora), California burclover (medicago polymorpha), horse purslane (trianthema portulacastrum), field bindweed (convolvulus arvensis), Russian knapweed (centaurea repens), flax-leaved fleabane (conyza bonariensis), wild radish (raphanus sativus), tumble pigweed (amaranthus albus), stephanomeria (stephanomeria exigua), wild turnip (brassica campestris), buffalo goard (cucurbita foetidissima), common mullein (verbascum thapsus), dandelion (taraxacum officinale), Spanish thistle (xanthium spinosum), chicory (cichorium intybus), sweet anise (foeniculum vulgare), annual yellow sweetclover (melilotus indical), poison hemlock (conium maculatum), broadleaf filaree (erodium botrys), whitestem filaree (erodium moschatum), redstem filaree (erodium cicutarium), ivyleaf morning-glory (ipomea hederacea), shortpod mustard (brassica geniculata), buckhorn plantain (plantago lacenolata), sticky chickweed (cerastium viscosum), himalaya blackberry (rubus procerus), purslane speedwell (veronica peregrina), Mexican tea (chenopodium ambrosioides), Spanish clover (lotus purshianus), Australian brassbuttons (cotula australia), goldenrod (solidago californica), citron (citrullus lanatus), hedge mustard (sisymbrium orientale), black nightshade (solanum nodiflorum), Chinese thornapple (datura ferox), bristly oxtongue (picris echioides), bull thistle (cirsium vulgare), spiny sowthistle (sonchus asper), tasmanian goosefoot (chenopodium pumilio), goosefoot (chenopodium botrys), wright groundcherry (physalis acutifolia), tomatillo groundcherry (physalis philadelphica), pretty spurge (euphorbia peplus), bitter apple (cucumis myriocarpus), indian tobacco (nicotiana bigelovii), common morning-glory (ipomoea purpurea), waterplantain (alisma triviale), smartweed (polygonum lapathifolium), mature sowthistle (sonchus asper), yellow nutsedge (cyperus esculentus), purple nutsedge (cyperus rotundus), lupine (lupinus formosus), and grasses of the family Gramineae such as annual rye grass, blue grass, water grass, barnyard grass, bermuda grass, fescue, mat grass, Johnson grass, and the like.

The systemic herbicidal component of the compositions of this invention is selected in view of the type of control desired (i.e. preemergent or postemergent) and the type of vegetation to be controlled according to the known attributes of the systemic herbicide. Additionally, the systemic herbicide should be sufficiently chemically stable in both the solid and liquid compositions to assure that the herbicide retains its activity for the period of time required to manufacture, store, transport, and apply the compositions. The stability of the systemic herbicide can be readily determined by adding an amount of the systemic herbicide to the urea-sulfuric acid composition in which it is to be employed and monitoring the combination by nuclear magnetic resonance (NMR). NMR can be used to monitor the frequency and magnitude of spectral peaks characteristic of a selected nucleus in the subject molecule; i.e., the systemic herbicide. Persistent spectral peak magnitude and frequency over a period of 5 to 6 hours indicate stability. Diminished magnitude or a shift in peak frequency associated with the selected nucleus indicates instability, i.e., that the arrangement of functional groups has been modified.

The systemic herbicide should also preferably be water-soluble, although relatively water insoluble systemic herbicides may be used if a surfactant or mechanical agitation is employed to disperse the herbicide throughout the solution. Essentially all systemic herbicides are either water soluble or are commercially available as dispersions or solutions in water-dispersible oils, all of which are readily dispersible or soluble in water.

Suitable systemic herbicides include all preemergent and postemergent systemic herbicides that are chemically stable and dispersible as discussed above. As used herein, the terms preemergent and postemergent refer to the plant to be controlled and not to a desirable crop plant that has been seeded or that is growing in the treated area. Thé compositions and methods of this invention are particularly beneficial when using systemic herbicides having postemergent activity, i.e., systemic herbicidal activity toward established plants, due to the dramatic improvements in postemergent, systemic activity available with these compositions and methods. Exemplary herbicides include the following: Chlorpropham, Propham, Oxyfluorfen, Endothall, Roundup®, and the like.

Chlorpropham, also known as CHLORO IPC®, Furloe®, and by other designations, contains the active ingredient isopropyl-N-m-chlorophenylcarbamate, manufactured by PPG Industries, Inc., and others having the formula:

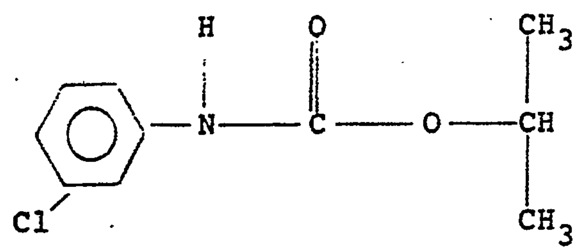

This herbicide has both preemergent and postemergent activity and is effective for the control of weeds in alfalfa, lima and snap beans, blueberries, cranberries, cranberries, carrots, ladino clover, garlic, seed grass, onions, spinach, sugar beets, and several other crops.

Propham, also known as IPC, contains the active ingredient isopropyl carbinilate having the formula:

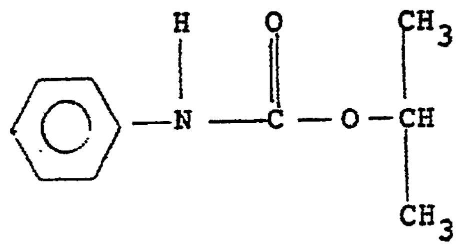

This herbicide also has both postemergent and preemergent activity and is effective for the control of weeds in alfalfa, flax, lettuce, red or crimson clover, ladino, spinach, sugar beets, and several other crops.

Oxyfluorfen, sold under the tradenames Goal®, Koltar®, and others, contains the active ingredient 2-chloro-1-(3-ethoxy-4-nitrophenoxy)-4-(trifluoromethyl) benzene having the formula:

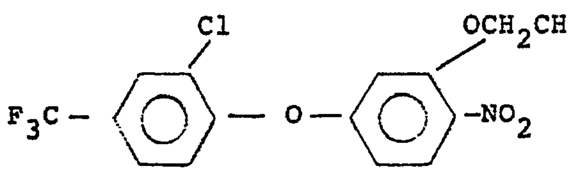

This herbicide is effective for both pre- and postemergent control of a broad spectrum of annual grasses and broadleaf weeds in crops such as soybeans, corn, cotton, tree fruits, grapes, nuts, and a variety of tropical plantation and ornamental crops.

Endothall, sold under a variety of names including Accelerate®, Aquathol®, Hydout®, and others, contains the active ingredient 7-oxabicyclo(2,2,1) heptane-2,3-dicarboxylic acid, usually as the sodium, potassium or amine salts, having the formula:

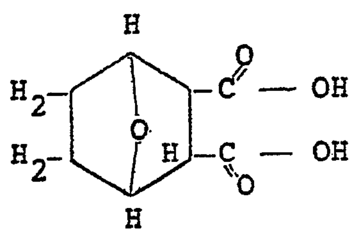

Endothall has activity as both as pre- and postemergent herbicide, defoliant, desiccant, aquatic herbicide and growth regulator, and is used as a potato vine killer, alfalfa and clover desiccant, cotton harvest aid, and on sugar beets, and turf, and as an aquatic herbicide and algicide.

Glyphosate isopropylamine salt, sold under the tradename Roundup®, contains the active component, N-(phosphonomethyl) glycine, isopropylamine salt, having the formula:

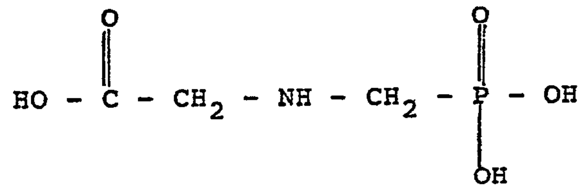

Glyphosate is a broad spectrum, postemergent, systemic herbicide effective for the control of many annual and perennial grasses and broadleaf weeds in addition to many tree and woody brush species both in cropland and noncrop sites. It is essentially nonselective.

The concentration of the systemic herbicide component in the liquid compositions of this invention as applied to vegetation or the soil, should be sufficient to accomplish the desired degree of pre- and/or postemergent control at the dosage rate employed. Dosage rates are discussed hereafter. Effective concentrations can be determined by reference to the manufacturer's recommendations and will usually correspond to about 10 to 50 percent, more often about 25 to 50 percent of the recommended concentration at the dosage rate recommended by the manufacturer. Manufacturer's recommended concentrations, as applied, vary widely depending on the effectiveness of the particular systemic herbicide involved, and can range from about 0.1 to about 50 weight percent, usually about 0.2 to about 10 weight percent.

Systemic herbicidal compositions usually have much higher active component concentrations as manufactured or packaged for sale and are designed for dilution prior to use. The same is true of the systemic herbicidal compositions of this invention. Thus, the concentrations of the systemic herbicidal component in the compositions of this invention are, as a practical matter, limited only by the solubility or dispersibility of the particular systemic herbicide in concentrated solutions of the urea-sulfuric acid component of the compositions of this invention. The concentrated compositions, therefore, will usually contain about 0.1 to about 10 weight percent, preferably about 0.1 to about 1 weight percent of the systemio herbicide component.

The systemic herbicide component concentration employed in the solid compositions of this invention should be proportionately higher than that desired in the applied solution to assure that an adequate concentration will be present when the solid is dissolved prior to application. For example, a solid urea-sulfuric acid composition that is to be dissolved to produce an aqueous solution containing 5 weight percent of a combination of urea and sulfuric acid would be diluted by a factor of 19 to 1. Thus, the solid composition should contain approximately 19 times the systemic herbicide component concentration desired in the solution on a weight percent basis. Hence, if a final solution systemic herbicide concentration of 0.1 weight percent is desired, the solid composition should contain approximately 1.9 weight percent of that component.

The mixtures of urea and sulfuric acid employed in the compositions of this invention are reaction

products of urea and sulfuric acid in which at least 25 percent of the sulfuric acid is present as the monourea-sulfuric acid adduct. They may be either solids or aqueous solutions of such mixtures.

The four-digit composition designations used herein for the urea-sulfuric acid component, e.g., 18-0-0-17, are conventionally used in the agricultural industry to designate the concentration of nitrogen, phosphorus (as $P_2O_5$), potassium (as $K_2O$), and a fourth component -- in this case sulfur, expressed as the element. Thus, the composition 18-0-0-17 contains 18 weight percent nitrogen derived from urea and 17 weight percent sulfur derived from sulfuric acid. Using the atomic weights for nitrogen (14.01) and sulfur (32.07) and the molecular formulas and molecular weights for urea (60.06) and sulfuric acid (98.08), it can be determined that this formulation contains 38.6 weight percent urea and 52.1 weight percent sulfuric acid. By difference, the solution contains 9.3 weight percent water. The concentrations of sulfuric acid and urea in all other compositions can be determined by the same procedure.

The urea-sulfuric acid compositions and some of their physical properties are illustrated in the ternary phase diagram of the drawing. The phase diagram defines the relative proportions in weight percent for each of the three components -- urea, sulfuric acid, and water -- at any point within the diagram. At each apex of the triangle the system consists completely of the indicated component. Thus, the urea concentration at the urea apex is 100 percent and diminishes linearly to 0 along a straight line from the urea apex to the $H_2O$-$H_2SO_4$ boundary line, i.e., the side of the triangle opposite the urea apex. The same is true of the remaining two components: water and sulfuric acid.

The diagram also illustrates the isotherms for the system at -10°C (14°F), 0°C (32°F), 10°C (50°F), 25°C (77°F), and 66°C (150°F). The 66°C (150°F) isotherm, is illustrated only partially at the lower lefthand portion of the diagram. Each isotherm defines compositions which, if cooled below the temperature indicated for the respective isotherm, will precipitate components of the system. However, the solutions will super-cool dramatically, e.g., by as much as much as 28°C (50°F), or more, under quiescent conditions in the absence of seed crystals, impurities, etc., that promote crystallization.

As indicated by the pattern of the isotherms, systems having a fixed ratio of urea to sulfuric acid become more stable at lower temperatures as the water concentration is increased. This is true throughout most of the phase diagram with the exception of the region in the vicinity of the higher acid eutectic in the lower right-hand portion of the phase diagram.

Three prominent eutectics are apparent within the region of the illustrated isotherms. Each eutectic represents a discontinuity in the response of the system, e.g., of crystallization point, to changes in solute concentration, and indicates the points of maximum solute concentration for a given isotherm in the regions of the phase diagram associated with those eutectics.

As indicated in the legend on the diagram, the lefthand eutectic on the 10°C (50°F) isotherm corresponds to the formulation 29-0-0-9. The middle eutectic on the same isotherm corresponds to the composition 18-0-0-17. The right-hand eutectic on the -10°C (14°F) isotherm corresponds to 9-0-0-25, and the formulation intermediate the 10°C (50°F) and the 25°C (77°F) isotherms between the middle and right-hand eutectics indicated by a triangular designation corresponds to 10-0-0-19.

The bold horizontal lines E - E' and F - F' within the diagram prescribe the boundaries of concentrated urea-sulfuric acid compositions that are preferable from the standpoint of manufacture and packaging prior to dilution for use. Compositions falling below line E - E' have solute, i.e., urea and sulfuric acid, concentrations of 50 weight percent or higher. Compositions falling below line F - F' located at the 25 percent water line, contain 75 weight percent of a combination of urea and sulfuric acid, or more. It can be readily seen that the four compositions designated in the diagram e.g., 18-0-0-17, etc., contain more than 75 weight percent solute.

Bold lines running between the urea-sulfuric acid boundary (the lower boundary of the diagram) and the water apex, generally prescribe the operable and preferred contact herbicidal compositions of this invention that also accentuate the action of combined system herbicides. Line Y defines compositions having a 2/1 urea/sulfuric acid molar ratio. This line intersects the urea-sulfuric acid boundary at a point corresponding to approximately 55.0 weight percent urea. Compositions falling to the left of line Y do not contain any amount of the monourea-sulfuric acid adduct; they consist of combinations of the diurea adduct and excess urea. Such compositions have little or no contact herbicidal activity in comparison to the monourea adduct, and do not act as synergists for the systemic herbicide components of this invention. Compositions falling to the right of line Y contain at least some of the monourea adduct, and the concentration of that adduct increases as the composition approaches line X. Compositions falling on line X have urea/$H_2SO_4$ molar ratios of 1/1 and correspond to those in which both the urea and sulfuric acid are present only as the monourea-sulfuric acid adduct. Line X intersects the urea-$H_2SO_4$ boundary at a urea concentration of 38.0 weight percent.

Compositions falling between lines A and B are those in which at least 25 percent of the sulfuric acid is present as the monourea-sulfuric acid adduct. In compositions falling on line A, 25 percent of the sulfuric acid is present as the monourea adduct and 75 percent is present as the diurea-sulfuric acid adduct. In compositions falling along line B, 25 percent of the sulfuric acid is present in the monourea adduct and 75 percent is present as free sulfuric acid. Line A intersects the urea-sulfuric acid boundary at a point corresponding to 51.9 weight percent urea; line B intersects the same boundary at 13.2 weight percent urea level.

In compositions falling between lines C and D, at least 50 percent of the sulfuric acid is present as the monourea adduct. Line C defines compositions

in which 50 percent of the sulfuric acid is present as the monourea adduct and 50 percent is present as the diurea-sulfuric acid adduct. Compositions falling on line D correspond to those in which 50 percent of the sulfuric acid is uncomplexed, free sulfuric acid. Lines C an D intersect the urea-sulfuric acid boundary at points corresponding to 47.9 and 23.4 weight percent urea, respectively.

The 18-0-0-17 composition, and close approximations such as 17-0-0-17, are convenient formulations to manufacture for the purposes of this invention. They have the highest solute concentrations obtainable -- approximately 90 percent urea and sulfuric acid -- for compositions within the desired range having reasonably low crystallization points, e.g., 10°C (50°F). Deviation from the exact 1/1 adduct, e.g., to the 17-0-0-17 formulation, is sometimes desired for manufacturing convenience as discussed hereinafter. While the 17-0-0-17 formulation has a urea-sulfuric acid molar ratio of approximately 1.05/1, that ratio is sufficiently close to the preferred ratio of 1/1 to bring the formulation within the most preferred composition range.

The minor compromise in urea-sulfuric acid ratio represented by the 18-0-0-17 and 17-0-0-17 formulations is sometimes justified by the fact that compositions having 10°C (50°F) crystallization temperatures and 1/1 urea/sulfuric acid molar ratios would contain only about 85 weight percent solute. Thus, the minor variation in molar ratio allows the production of compositions closer to the eutectic point having the same crystallization temperature and approximately 5 percent higher solute concentration.

The urea-sulfuric acid component can be produced by the reaction of urea and sulfuric acid and, optionally water, by either batch or continuous processes. The more concentrated solutions, i.e., those containing less than 25 weight percent, preferably less than 15 weight percent water, are particularly preferred for purposes of manufacture and shipment. The urea-sulfuric acid component is also preferably substantially or completely free of decomposition products of urea and/or sulfuric acid such as sulfamic acid, ammonium sulfamate, and/or ammonium sulfate, to assure that the preferred liquid and solid herbicidal compositions of this invention are also free of such decomposition products. Such urea-sulfuric acid components can be produced by the reaction of solid urea and concentrated sulfuric acid by the methods described in United States Patent No. 4,445,925, the disclosure of which is incorporated herein by reference.

The monourea-sulfuric acid adduct contained in these urea-sulfuric acid mixtures accentuates the activity of the systemic component. Little or no improvement in systemic herbicide activity is observed when systemic herbicides are blended with formulations such as 29-0-0-9 that contain the diurea-sulfuric acid complex and no significant amount of the monourea-sulfuric acid complex. Accordingly, the most preferred compositions are those in which essentially all of the urea and and sulfuric acid are present as the monourea-sulfuric acid adduct. Compositions containing substantial amounts of the other components can be used, although they are not as active as the preferred compositions.

Unreacted, free sulfuric acid is undesirable in most cases since it is not as effective a contact herbicide as the monourea adduct on an equivalent acid basis, it has little or no beneficial effect on systemic activity, it is more corrosive than is sulfuric acid combined with urea, and it tends to react with some of the systemic herbicides. Thus, in both the solid and aqueous compositions, preferable at least about 75, usually at least about 85, and preferably at least about 90 percent of the sulfuric mast acid is present as the mono- and/or diurea-sulfuric acid adduct. Particularly preferred compositions are those that contain essentially no free sulfuric acid; thus, essentially 100 percent of the sulfuric acid would be combined with urea as the mono- and/or diurea adduct. Furthermore, since the monourea adduct is the most active combined form of urea and sulfuric acid, at least about 25, usually at least about 50, preferably at least about 70, and most preferably about 80 to about 100 percent of the sulfuric acid is present as the monourea-sulfuric acid adduct.

The monourea-sulfuric acid adduct is an active contact herbicide, even in very dilute aqueous solutions and can be used to control a variety of vegetation even in the absence of other herbicides. In addition to its herbicidal activity, the monourea adduct has the advantage that it accentuates the activity of the systemic herbicide component of the compositions of this invention. For instance, the 17-0-0-17 composition which contains about 85 weight percent urea and sulfuric acid on a combined weight basis, as produced, can be diluted by as much as 200 to 1 with water to produce herbicidally active solutions containing less than 0.5 weight percent solute. Even higher dilution ratios can be employed but are not preferred due to the difficulty involved in applying a sufficient amount of the active monourea adduct to crop foliage with extremely dilute solutions.

Although the monourea adduct appears to dissociate to urea and sulfuric acid in solutions containing significantly less than about 0.5 weight percent combined urea and sulfuric acid, the dissociated components recombine to form the active adduct on the foliage of treated vegetation. This is apparently due to water evaporation and consequent concentration of the urea and sulfuric acid.

Although very low monourea adduct concentrations, e.g., 0.2 percent, or less, do not allow for sufficient dosage rates to provide adequate contact herbicidal activity in many instances, they still significantly accentuate the activity of the systemic component. Higher monourea adduct concentrations are usually employed when the applicator prefers to obtain significant vegetation control as a result of the contact herbicidal activity. Thus, the applied solutions will usually contain at least about 0.5, generally at least about 1, and preferably at least about 5 weight percent urea and sulfuric acid based on the combined weight of those two components.

The concentrated solutions, e.g., those having urea-sulfuric acid concentrations of 85 percent or

higher, are very active contact herbicides. However, they are difficult to apply evenly over the foliage due to the relatively low dosage rates required and to their relatively high viscosity.

With these factors in mind, the applied solution will usually contain about 0.5 to about 90, normally about 1 to about 50, and preferably about 5 to about 30 weight percent urea and sulfuric acid on a combined weight basis.

It is preferable to manufacture solutions containing relatively high concentrations of urea and sulfuric acid in order to avoid handling and transporting significant amounts of water. Thus, the compositions, as produced, usually contain at least about 50 and preferably at least about 70 weight percent urea and sulfuric acid on a combined weight basis.

The useful and preferred concentrations of urea and sulfuric acid, and of the mono- and diurea adducts relative to each other, can also be expressed in terms of the urea/sulfuric acid molar ratio. This ratio will be the same in solid compositions of this invention as in aqueous solutions made by dissolving those solid compositions in water, and will usually be within the range of about 1/4 to about 7/4, preferably about 1/2 to about 3/2, and most preferably about 1/1 to about 3/2. Urea/sulfuric acid molar ratios within the range of about 1/1 to about 3/2 define compositions containing essentially no uncomplexed sulfuric acid in which at least 50 percent of the sulfuric acid is present as the monourea-sulfuric acid adduct.

A composition having a urea/sulfuric acid molar ratio of 3/2 contains 3 moles of urea for every 2 moles of sulfuric acid. Assuming complete reaction between the urea and sulfuric acid (which is essentially always the case), 50 percent of the sulfuric acid is present as the diurea-sulfuric acid adduct and 50 percent is present a the monourea adduct. Similarly, in a composition having a urea/sulfuric acid ratio of 1/2, 50 percent of the sulfuric acid is present as the monourea-sulfuric acid adduct and 50 percent is unreacted "free" acid.

The compositions of this invention may also contain one or more chemically stable surfactants. Surfactants increase the herbicidal activity of both the systemic herbicide component and the urea-sulfuric acid component toward susceptible vegetation and broaden the spectrum of plant species affected by the herbicidal compositions of this invention. Surfactants increase the wetting ability of the liquid compositions of this invention for plant foliage, particularly for the foliage of plants that are coated with a significant amount of waxy cuticle, and facilitate the distribution of those compositions to foliage and to the soil by spraying or by other means. Many surfactants, particularly nonionic surfactants, are nonreactive and are sufficiently stable to afford significant shelf life. Stability of the surfactant can be measured by the NMR technique described above. Illustrative of classes of stable surfactants are nonionics such as the alkylphenol polyethylene oxides, anionics such as the long chain alkyl sulfates, and cationics such as 1-hydroxyethyl-2-heptadecenyl gloxalidin. Of these, the polyethylene oxide nonionic surfactants are particularly preferred. Illustrative of preferred specific surfactants is the nonionic surfactant marketed by Thompson-Hayward, Inc., under the trademark T-MULZ 891.

The surfactant concentration should be sufficient to increase the foliage wetting ability of the aqueous solution. Increased wetting ability markedly increases both the degree and spectrum of contact herbicidal activity of the monourea-sulfuric acid adduct and improves the herbicidal activity of the systemic component.

Surfactant concentration will usually be at least about 0.05, generally at least about 0.1, and preferably at least about 0.2 weight percent of the aqueous solution as applied. Surfactant concentrations of about 0.2 to about 1 weight percent are adequate in most applications. The concentration of surfactant in the solid compositions of this invention should be sufficient to produce the desired concentration in the aqueous solution to be produced by dissolving the solid in water, and can be determined by the procedure used to determine the concentration of the systemic herbicide component in the solid compositions of this invention as discussed above.

The solid and liquid compositions can also contain any one or more of the known major and minor plant nutrients and/or soil adjuvants such as phosphorus (from phosphoric acid), magnesium, manganese, potassium, zinc, boron, etc., from the respective oxides, hydroxides, sulfates, nitrates, and the like. They may also contain nitrogen and/or sulfur in addition to that present in the urea and sulfuric acid. Illustrative of other forms of nitrogen and sulfur that can be used are the nitrates such as magnesium nitrate, ammonium compounds such as ammonium phosphate, sulfates such as potassium and ammonium sulfate, and the like. The concentration of these additional major and minor nutrients in the liquid and solid compositions of this invention should be sufficient to introduce the desired amount of the selected nutrients to the soil.

Taking all of the foregoing factors into account, the liquid herbicidal compositions of this invention will comprise about 0.5 to about 90, generally about 1 to about 50, and preferably about 5 to about 30 weight percent of the combination of urea and sulfuric acid [on a dry-weight basis]; at least a herbicidally effective amount of the systemic herbicide component; and, optionally, at least about 0.5, generally at least about 0.1, and preferably at least about 0.2 weight percent of a surfactant stable in the composition. The lower concentrations of the urea-sulfuric acid component are preferred for application to vegetation and/or to the soil, and the higher concentrations are preferred for manufacture, transport and storage. Higher concentrations of the surfactant and systemic herbicide components are preferred in the concentrated solutions of the urea-sulfuric acid component to assure the presence of effective concentrations of all components upon dilution with water prior to application.

The solid compositions of this invention usually contain at least about 50, and preferably at least about 80 weight percent of the urea-sulfuric acid component. The solids will usually contain at least about 20, generally at least about 50, preferably at

least about 80 weight percent of the preferred monourea-sulfuric acid adduct. They also usually contain sufficient amounts of the systemic herbicide and optional surfactant components to assure the presence of an effective concentration of those two components in aqueous solutions produced by dissolving the solid compositions in water prior to or during contacting with the vegetation or soil. Thus, the solid compositions will contain at least about 0.1, usually at least about 0.2, and preferably at least about 0.5 weight percent of the systemic herbicide component sufficient to assure the presence of an effective amount of that component in aqueous solutions produced by dissolving the solid in water. The solid compositions may contain an amount of the optional surfactant component sufficient to provide an effective surfactant concentration in aqueous solutions produced from the solid compositions of this invention. The concentration of surfactant, when used, will correspond to at least about 0.05, usually at least about 0.1, and preferably at least about 0.2 weight percent of the total solid composition.

The solid compositions of this invention containing one or more systemic herbicides, surfactants, and/or additional nutrients, can be obtained by crystallizing them from their respective aqueous solutions. The systemic herbicide (and surfactant and/or nutrient, when present) will either crystallize at approximately the same temperature or will be entrained along with the crystallized urea-sulfuric acid component. In the alternative, the systemic component, surfactant, and/or nutrient, can be added to the dried or damp urea-sulfuric acid component by any suitable mixing technique after its crystallization from solution.

The 18-0-0-17 composition crystallizes at 10°C (50°F). The 10-0-0-19 composition crystallizes at about 6°C (42°F), and the 9-0-0-25 composition crystallizes at -10°C (14°F), as indicated by the crystallization curves in the diagram. Crystallization points for other compositions can be determined from the diagram, or by cooling the selected solution until crystallization occurs. The surfactant and systemic herbicide component concentrations used in these compositions do not significantly affect crystallization point. The crystallized material can be separated from the supernatant aqueous phase by filtration or by decanting excess liquid, and drying.

Since lower crystallization temperatures are required to separate the desired urea-sulfuric acid component from the more dilute solutions, it is preferable to begin with more concentrated solutions having higher crystallization points such as the 18-0-0-17 composition which contains only about 10 percent water. More concentrated solutions, and those having higher crystallization temperatures such as solutions on the 25°C (77°F) crystallization curve, are even more preferred since less cooling is required to obtain a similar quantity of the urea-sulfuric acid component.

Substantially anhydrous solid compositions can be obtained by washing the dried, crystallized urea-sulfuric acid component with a strongly hydrophillic solvent such as absolute ethanol or acetone. Ten to 100 weight parts solvent per weight part solute are usually adequate for this purpose.

The monourea adduct-containing component is stable at ambient conditions and has negligible vapor pressure up to its decomposition temperatures of about 150°C (300°F) in the absence of water. These compositions decompose almost explosively at much lower temperatures, e.g., 80°C (176°F) and below, in the presence of water. The most preferred solid composition consisting of the 1/1 urea/sulfuric acid molar adduct has a melting point of about 38°C (100°F) and the melting point of the urea-sulfuric acid component increases as the urea/acid ratio deviates from 1:1 in either direction in a manner paralleling the crystallization curves in Figure 1. Decomposition temperatures of the anhydrous solids do not change significantly with composition.

The liquid herbicidal compositions of this invention can be produced by any method capable of producing a solution or dispersion of the systemic herbicide component (and the surfactant and other additives when employed) in an aqueous solution of the urea-sulfuric acid component. Thus, the systemic herbicide can be added to the concentrated urea-sulfuric acid solution during or immediately after its manufacture by the process described in United States Patent No. 4,445,925 referred to above, or it can be added to the diluted urea-sulfuric acid solution prior to application of the herbicidal composition to the plants and/or soil to be treated. Alternatively, the systemic herbicide can be mixed with the amount of water required to produce a concentrated or dilute aqueous solution, as desired, before or along with the solid or concentrated aqueous urea-sulfuric acid component. Of course, dissolution of the solid compositions of this invention that contain both the urea-sulfuric acid component and the systemic herbicide component, in water, will also result in formation of the herbicidally active liquid compositions of this invention.

In the method of this invention, the novel liquid or solid herbicidal compositions referred to above are contacted with the foliage of plants to be controlled (when post emergent control is desired) and/or with the soil (when preemergent control is desired) by spraying, dusting, or otherwise distributing the liquid or solid composition onto the foliage and/or the soil surface. Alternatively, when preemergent control is the principal or sole objective, the liquid or solid compositions can be applied beneath the soil surface by injection or by application to the soil surface during or immediately before plowing, tilling, or other methods of soil mixing.

When the solid compositions of this invention are applied to the foliage or to the soil (either topically or subsurface) as described above, steps should be taken to assure mixing of the solid composition with water either immediately upon or shortly after its application. This can be readily achieved by any one of several procedures including prewetting the foliage and/or soil with water, wetting the foliage and/or the soil shortly after application of the solid herbicidal compositions, and the like. When the solid is applied to relatively dry foliage or soil, it is preferably wet with sufficient water to assure formation of an aqueous solution of the systemic herbicide and urea-sulfuric acid components on the foliage or in or on the soil within 24 hours, preferably within 10 hours, and most preferably within 1 hour following application of the solid.

In the presently preferred method, the novel liquid compositions of this invention are applied directly to the foliage, or to the soil surface of subsurface, rather than being formed in situ from the applied solid as discussed above. The aqueous solutions may be performed and applied to the foliage, soil, etc., as such, or they can be formed in situ by sequential or simultaneous application of two or more solutions which, when combined, form the novel compositions of this invention. Thus, for example, a urea-sulfuric acid solution and a systemic herbicide-containing solution can be sequentially applied to the foliage or soil to be treated at respective dosage rates correlated to provide a combination that forms the desired solution in situ. It is essential only that the vegetation to be treated be contacted with the described compositions of this invention. Similarly, the surfactant, when employed, can be applied in a separate solution and mixed in situ, with the urea-sulfuric acid and systemic herbicide components. Nevertheless, for convenience and ease of application and control, the use of formed solutions containing all of the desired components is presently preferred.

The compositions of this invention can also be employed to eliminate undesired vegetation from fields seeded with desired crop plants prior to crop emergence, provided, of course, that the selected systemic herbicide component does not exhibit preemergent activity toward the seeded crop either prior to or after germination. The contact herbicidal activity of the urea-sulfuric acid component dissipates rapidly upon exposure to the soil environment, i.e., within about 24 hours or less. Thus, seeded crops are not damaged when the urea-sulfuric acid component is topically applied, even after germination, particularly when the herbicidal composition is applied at least 24 hours prior to emergence.

The herbicidal compositions of this invention are usually applied at dosage rates corresponding to at least about 56, generally about 56 to about 1120, and preferably about 112 to about 560kg per hectare (at least about 50, generally about 50 to about 1000, and preferably about 100 to about 500 pounds per acre) of the monourea-sulfuric acid adduct. These dosage rates correspond to at least about 56, generally about 56 to 4480, and preferably about 112 to about 2240kg per hectare (at least about 50, generally about 50 to about 4000 and preferably about 100 to about 2000 pounds per acre) of the combination of urea and sulfuric acid when using the compositions of this invention in which atleast about 25 percent of the sulfuric acid is present as the monourea-sulfuric acid adduct.

Relatively higher dosage rates of compositions deviating significantly from the 1/1 urea/sulfuric acid molar ratio composition are required to obtain the same degree of contact herbicidal effectiveness under otherwise identical conditions, i.e., at similar dosage rates with similar plant types. The most significant consideration in this respect is the amount of the monourea-sulfuric acid adduct applied and retained on the plant foliage or on or in the soil in contact with plant seeds. Thus, higher dosage rates should be used when applying compositions in which only a portion of the sulfuric acid is present as the monourea adduct, i.e., when a significant amount of the acid is present either as the diurea-sulfuric acid adduct or as free sulfuric acid. Although free sulfuric acid has some herbicidal activity, it is much less active than the monourea-sulfuric acid adduct on an equivalent sulfuric acid basis.

The dosage rate of the systemic herbicide component should be sufficient to accomplish the desired control of treated vegetation and/or plant seeds and can be less than recommended by the manufacturer of the systemic herbicide component due to the synergistic effect of the urea-sulfuric acid component. Thus, effective dosage rates of the systemic herbicide will be less than about 50, usually about 10 to about 50, and preferably about 10 to about 25 percent of that recommended by the manufacturer. Of course, higher dosage rates of the systemic herbicide can be employed but are not generally required. The absolute dosage rates of the systemic herbicide component will vary widely from one systemic herbicide to the next due to the large differences in specific herbicidal activity between different systemic herbicides. Specific herbicidal activity, as that term is used herein, refers to the absolute amount of a specific herbicide required to accomplish a given degree of vegetation control. The magnitude of the difference in specific herbicidal activity that can exist between different systemic herbicides is illustrated by the fact that Roundup is effective at dosage rates of a few hundred grams per hectare (several ounces per acre) while 2,4-dinitrophenol must be applied at rates of the order of 100kg per hectare (100 pounds per acre) or more in order to achieve adequate control.

The dosage rates of the urea-sulfuric acid component and of the systemic herbicide component required to accomplish the desired pre- and/or postemergent control will generally be within the ranges discussed above for these two components. However, the dosage rate of each component best suited to accomplish the desired degree and duration of control, and the desired degree of selectivity (when selectivity is required) also can be determined by actual greenhouse or field testing. Such tests may involve a series of compositions having different concentrations of each active component and/or a series of tests in which the same composition is applied to different plots of the same plant population in a series of different dosage rates. The dosage rate required to eliminate the selected plants due to the contact herbicidal activity of the urea-sulfuric acid component alone can be readily determined by applying a composition containing only that component to samples of the foliage to be treated, e.g., to separate, small areas within the selected field, at different dosage rates, and observing the extent of plant kill. When effective concentrations and dosage rates are employed, significant necrosis and

plant wilting are evident within 10 minutes and will provide an adequate indication of effectiveness. The full extent of plant kill will not be apparent for approximately 2 to 24 hours. In most situations, prescreening tests of that duration are not inordinant. Plant necrosis is clearly indicated within 24 hours by the disappearance, darkening and/or desiccation of plant tissue. The speed and degree of vegetation control increases as dosage rate is increased. Dosage rate is the primary variable so long as the applied volume is not so high that significant runoff occurs from plant foliage.

In the alternative, the initial testing can be done, as described above, using combinations of the urea-sulfuric acid component and the selected systemic herbicide of different concentration and/or at different dosage rates to determine the optimum composition and dosage rate to control the vegetation in question.

The applicator should observe that a broader spectrum of plant species is affected by the systemic component in the compositions of this invention due to the synergistic effect of the monourea adduct. That factor should be kept in mind when designing and testing compositions containing selective systemic herbicides for the selective elimination of undesired vegetation in the presence of desired crops. The full extent of weed control and/or crop damage due to the systemic herbicide component will become apparent within the period defined by the manufacturer of the systemic herbicide and will vary from one herbicide to the next. For instance, the full effect of glyphosate isoproplyamine salt, a broad spectrum herbicide, is not apparent for approximately 6 to 7 days. In contract, the degree of control obtained with 2,4-D is generally apparent within 48 hours or less.

The best combination of variables, i.e., systemic herbicide type and concentration, dosage rate, solution concentration, urea/sulfuric acid molar ratio, etc., for the entire field can be determined by the test procedures described above, or by other tests that enable the applicator to define effective or optimum ranges for those variables.

The compositions of this invention containing one or more surfactants, the urea-sulfuric acid component, and one or more broad spectrum systemic herbicides, can be used to eliminate essentially all vegetation from the treated area. Even minor amounts of surfactant dramatically increase the contact herbicidal activity of the urea-sulfuric acid component and the spectrum of plant varieties it controls. The activity of that component increases as surfactant concentration is increased within the ranges discussed above to the point that the compositions of this invention that contain a significant amount of surfactant, e.g., 0.1 weight percent surfactant as applied, are essentially nonselective. Thus, the surfactant-containing compositions of this invention can be used to control the more resistant plant varieties, such as, volunteer wheat and Russian thistle, even in the absence of a systemic component that is effective for the control of such plant species.

The compositions of this invention that do not contain any significant amount of surfactant, e.g., less than 0.05 weight percent surfactant as applied, can be used to selectively control susceptible plants in the presence of more resistant desirable plants, such as crop plants. The tolerance of vegetation to the surfactant-free compositions varies significantly between species. Thus, for example, relatively low dosage rates are required to eliminate morning glory while higher dosage rates and surfactants are required to kill more zerophytic plants such as onions and garlic, the foliage of which is protected by a significant amount of waxy coating or cuticle.

The foliage and stems of essentially all plants are protected, to some extent, by a waxy cuticle coating, and the degree of such protection can vary significantly from one species to the next. The contact activity of the urea-sulfuric acid component toward different plant species appears to correlate with the degree of protection afforded by the waxy cuticle on a given plant species. Thus, the effect of surfactant on contact activity may be associated with the surfactant's ability to transport the active monourea adduct and the systemic herbicide components through the protective coating to the plant cell tissue.

Illustrative of crops that are sufficiently tolerant to the surfactant-free compositions of this invention that do not contain a systemic component designed to control such crops are onions (green and dry bulb), leeks, shallots, spring onions, garlic, chives, cotton, broccoli, cauliflower, cabbage (red and green), Brussel sprouts, Chinese cabbage, bok choy, turf, and some cereal crops such as wheat and barley. Thus, weeds can be controlled in the presence of these and other tolerant crops and plants with compositions of this invention containing systemic herbicides that are not toxic to such crops.

The herbicidal compositions and methods of this invention have numerous advantages over compositions and methods available to the art. They dramatically accentuate the activity of both post- and preemergent systemic herbicides and broaden the spectrum of plant varieties that are controlled by the systemic herbicide component. Thus, they reduce the amount of the systemic herbicide component required to achieve a given degree of vegetation control, or, conversely, increase the control achieved with a specific dosage rate of the systemic herbicide component. By reducing the amount of the systemic herbicide required to obtain the desired control of vegetation, the compositions and methods of this invention reduce both the immediate and persistent toxicity of the herbicidal compositions to humans, wild life, and to the environment, and they reduce the residual toxicity remaining on food crops grown in areas treated with the herbicidal compositions of this invention. By reducing the amount of the systemic herbicide component required to obtain the desired degree of vegetation control, the compositions and methods of this invention reduce the cost required for such control.

The compositions and methods of this invention exhibit significant contact herbicidal activity (in addition to their systemic activity) due to the contact herbicidal activity of the monourea-sulfuric acid adduct contained in the urea-sulfuric acid component. They afford the applicator and grower with a greater degree of flexibility than is available with other herbicidal compositions and methods of vegetation control since they can be used to selectively eliminate undesired vegetation existing in the presence of more resistant, desired vegetation such as agricultural crops. In the alternative, by appropriate selection of dosage rates and of the systemic herbicide component, the compositions and methods of this invention can be employed as broad spectrum, general purpose herbicides to control essentially all forms of vegetation in the treated area. The effectiveness of the described herbicidal compositions and methods, and the spectrum of plant varieties they control, can be increased even further by the use of surfactants. Surfactants increase both the contact and systemic herbicidal activity, and increase the number of plant varieties controlled by the novel compositions and methods.

The described compositions have the further advantage of being usable as either solids or liquids, and each can be employed in either concentrated or dilute form, thereby allowing the applicator even further flexibility in selecting methods of application and treatment. The novel compositions and methods allow for the use of complex organic, systemic herbicide components in the presence of relatively concentrated sulfuric acid due to the fact that the urea-sulfuric acid component of these compositions attenuates the destructive activity of concentrated sulfuric acid toward such complex organic molecules. These compositions and methods have the further advantage that they result in the addition of significant amounts of nutrient nitrogen and sulfur to the soil due to the relatively rapid conversicn of the urea-sulfuric acid component to nutrient nitrogen and sulfur upon contact with the soil environment. They also result in the addition of acid to the soil which constitutes a significant advantage, particularly in calcareous soils in which the neutralization of basic soil components is desired.

The invention is further described by the following examples which are illustrative of specific modes of practicing the invention and are not intended as limiting the scope of the invention defined by the appended claims.

EXAMPLE 1

Four replicate test plots of 2.4 hectares (six acres) each of an established weed population on a cherry orchard floor comprising sowthistle, chickweed, and water grass, were foliarly treated with 470 litres per hectare (50 gallons per acre) of undiluted 17-0-0-17 containing 12g per litre (0.1 pound per gallon) of Solicam® (also known as Norflurazon) containing the active ingredient 4-chloro-5(methylamino)-2-(a,a,a-trifluoro-m-tolyl)-3(2H)-pyridazinone. This treatment corresponded to a Solicam® dosage rate of 5.6kg per hectare (5 pounds per acre) and resulted in the almost immediate kill of all weed species and 18 weeks of systemic control as indicated by the absence of weed reemergence.

EXAMPLE 2

Four replicate 2.4 hectare (six-acre) plots of the weed population described in Example 1 were treated with 9kg per hectare (8 pounds per acre) of Solicam® (323g per litre - 0.27 pounds per gallon) in 280 litres per hectare (30 gallons per acre) of water. This treatment resulted in no initial kill. Systemic control became apparent after one week and continued through the sixth week after application at which time the weeds reemerged.

EXAMPLE 3

Two replicate four-hectare (ten-acre) plots of an established population of henbit, chickweed, and several annual grasses, on the floor of an almond orchard were treated by foliar application of 280 litres per hectare (30 gallons per acre) of undiluted 17-0-0-17 containing 16g per litre (0.133 pounds per gallon), that is, 4.5kg per hectare (4 pounds per acre) Surflan®, known by the common name Oryzalin, containing the active ingredient 3,5-dinitro-$N^4$-dipropyl-sulfanilamide. This treatment resulted in rapid initial kill as evidenced by complete weed population control within 24 hours, and 68 days of systemic control.

EXAMPLE 4

Two replicate four-hectare (ten-acre) plots of the weed population described in Example 3 were treated with 6.7kg per hectare (six pounds per acre), that is, 24g per litre (0.2 pounds per gallon) Surflan® applied in 280 litres (30 gallons) of water per acre. This treatment resulted in systemic control after three days and effective control for 40 days after which the weed population reemerged.

EXAMPLE 5

Two replicate 2.4 hectare (six-acre) plots of an established weed population comprising henbit, chickweed, groundsel, and foxtail, on a grape vineyard floor were treated by foliar application of 235 litres per hectare (25 gallons per acre) of undiluted 17-0-0-17 containing 9.6g per litre (0.08 pounds per gallon), that is, 2.24kg per hectare (2 pounds per acre) of Karmex®, also known as Diuron, containing the active ingredient 3-(3,4-dichlorophenyl)-1,1-dimethylurea. This treatment resulted in rapid initial kill evidenced by complete control of the weed population within 24 hours followed by 60 days of systemic control prior to weed reemergence.

EXAMPLE 6

The operation of Example 5 was repeated by foliar application of the described 17-0-0-17-Karmex® solution diluted with an equal volume of water to provide 560 litres per hectare (60 gallons per acre) spray volume. This treatment resulted in initial weed control within 24 hours and 60 days of systemic control.

EXAMPLE 7

Two replicate 2.4 hectare (six-acre) plots of the weed population described in Example 5 were treated by foliar application of 4.5kg per hectare (four pounds per acre), that is, 16g per litre (0.133 pounds per gallon) Karmex® in 280 litres per hectare (30 gallons per acre) water. This treatment resulted in apparent systemic control after 24 hours which continued for 42 days prior to weed reemergence.

EXAMPLE 8

Six replicate 0.4 hectare (one-acre) plots of an established weed population comprising sowthistle, dandelion, malow, and western henbit, on an apple orchard floor were treated by foliar application of 235 litres per hectare (25 gallons per acre) 17-0-0-17 containing 3g per litre (0.4 ounces per gallon) of Paraquat 700g per hectare (10 ounces per acre) diluted with an equal volume of water. This treatment resulted in rapid initial kill evidenced by complete weed control within 24 hours and 50 days of continued systemic control prior to weed reemergence.

EXAMPLE 9

Six replicate 0.4 hectare (one-acre) plots of the weed population described in Example 8 were treated by foliar application of 2.24kg per hectare (32 ounces per acre) Paraquat diluted with 470 litres water per hectare (50 gallons of water per acre), that is, 4.8g per litre (0.64 ounces per gallon). This treatment resulted in immediate systemic control of all weeds except malow, and continued systemic control of all weeds except malow for 40 days.

EXAMPLE 10

Six replicate 0.4 hectare (one-acre) plots of an established weed population comprising cheese weed, burrclover, sowthistle, henbit, and malow, on an apple orchard floor, were foliarly treated with 235 litres per hectare (25 gallons per acre) of 17-0-0-17 diluted with an equal volume of water and containing 0.15g per litre (0.02 ounces per gallon) of Roundup®; that is, a 1.68kg per hectare (24 ounce per acre) dosage rate. This treatment resulted in immediate weed control within 24 hours and 62 days continued systemic control prior to weed reemergence.

EXAMPLE 11

Six replicate 0.4 hectare (one-acre) plots of the weed population described in Example 10 were treated by foliar application of 4.48kg per hectare (64 ounces per acre) of Roundup® diluted with water to produce 470 litres per hectare (50 gallons per acre) spray volume; i.e. 9.58g Roundup® per litre (1.28 ounces per gallon) of spray. This treatment resulted in initial systemic kill and 55 days of continued systemic control before weed reemergence.

EXAMPLE 12

Two replicate eight-hectare (twenty-acre) plots of an established weed population comprising chickweed, groundsel, fiddleneck, nettle, and foxtail in dormant alfalfa were treated by foliar application of 185 litres per hectare (20 gallons per acre) undiluted 17-0-0-17 containing 3g per litre (0.025 pounds per gallon), that is, 560g per hectare (0.5 pounds per acre) Velpar®, also known as Hexazinone, containing the active ingredient 3-cyclohexyl-6-(dimethylamino)-1-methyl-1,3,5-triazine-2,4(1H,3H)-dione. The total herbicide dosage was purposely kept low to avoid damage to the dormant alfalfa crop. This treatment resulted in 95 percent control of all weed species and no detectable damage to the alfalfa crop either before or after its reemergence. The extent of continued systemic control could not be determined due to reemergence of the alfalfa crop.

EXAMPLE 13

Two replicate eight-hectare (twenty-acre) plots of the weed population described in Example 12 were treated by foliar application of 840g per hectare (0.75 pounds per acre) Velpar® diluted with water to produce 185 litres per hectare (20 gallons per acre) spray volume, that is, 4.5g Velpar® per litre (0.0375 pounds per gallon). This treatment resulted in 95 percent control of chickweed and groundsel but less than 10 percent control of fiddleneck, nettle, and foxtail.

EXAMPLE 14

Two replicate eight-hectare (20-acre) plots of an established weed population comprising sowthistle, chickweed, clover, and foxtail in dormant alfalfa were treated by foliar application of 185 litres per hectare (20 gallons per acre) of undiluted 17-0-0-17 containing 15.6ml per litre (0.125 pints per gallon) of Furloe®; that is, 2.92 litres Furlow® per hectare (215 pints per acre). As in Examples 12 and 13, herbicide dosage rate was purposely kept low to avoid damage to the dormant alfalfa crop. This treatment resulted in 80 percent control of all weed species.

EXAMPLE 15

Two replicate eight-hectare (twenty-acre) plots of the weed population described in Example 14 were treated with 4 litres per hectare (3.5 pints per acre) Furloe® diluted with water to produce 185 litres per hectare (20 gallons per acre) spray volume; that is, 21.88ml Furloe® per litre (0.175 pints per gallon). This treatment resulted in 70 percent control of sowthistle, chickweed, and clover, but less than 10 percent control of foxtail.

EXAMPLE 16

An established weed population comprising chickweed, fiddleneck, foxtail, sowthistle, and clover can be controlled by foliar application of 280 litres per hectare (30 gallons per acre) of undiluted 17-0-0-17

containing 18.75ml per litre (0.15 pints per gallon) of Furloe®; that is, 5.26 litres Furloe® per hectare (4.5 pints per acre) and 0.2 weight percent of the non-ionic surfactant marketed by Thompson-Hayward, Inc., under the trademark T-MULZ 891.

EXAMPLE 17

A solid herbicidal composition containing a surfactant and systemic herbicide can be prepared from an 18-0-0-17 solution having a crystallization temperature of 10°C (50°C) and containing 38.6 weight percent urea, 52.1 weight percent sulfuric acid, and 9.3 weight percent water. The 18-0-0-17 solution is cooled to a temperature of 1°C (34°F) to crystallize the solute which is then separated from the bulk of the water phase in a conventional filter press operated at 1°C (34°F). The damp solid is sequentially washed five times in five equal volumes of acetone; 2 weight-parts of acetone per weight part of the urea-sulfuric acid component are employed in each washing step. The resulting, substantially anhydrous, urea-sulfuric acid component having a composition corresponding to 19.8-0-0-18.7 is blended with Thompson-Hayward's T-MULZ 891-brand surfactant and Hexazinone to produce a final composition containing 0.6 weight percent T-MULZ 891 and 0.19 weight percent Hexazinone.

EXAMPLE 18

The solid composition produced in Example 17 can be employed to control an established weed population of groundsel, fiddleneck, foxtail, chickweed, burrclover and sowthistle. Equal weight parts of the described solid composition and water are mixed together to produce an aqueous solution having the composition 9.9-0-0-9.35 containing 0.3 weight percent T-MULZ 891-brand surfactant (4.8g per litre - 0.04 pounds per gallon) - and 0.095 weight percent Hexazinone (1.56g per litre - 0.013 pounds per gallon). The solid readily dissolves in water. The resulting solution can be foliarly applied to the established weed population at a dosage rate of 375 litres per hectare (40 gallons per acre) to effect both contact herbicide and systemic herbicide control of all weed species.

## Claims

1. A herbicidal composition of matter comprising urea, sulfuric acid, and a systemic herbicide which is chemically stable in said composition, in which the molar ratio of said urea to said sulfuric acid is within the range of about 1/4 to about 7/4, so that at least about 25 weight percent of the sulfuric acid is present as the monourea-sulfuric acid adduct.

2. A composition according to claim 1, wherein said urea and sulfuric acid, in combination, constitute at least about 1 weight percent of said composition, and the molar ratio of urea to sulfuric acid is within the range of about 1/2 to about 3/2.

3. A composition according to claim 2, wherein the molar ratio of said urea to said sulfuric acid is within the range of about 1/1 to about 3/2.

4. A composition according to claim 1, 2 or 3, wherein said systemic herbicide comprises a postemergent systemic herbicide.

5. A composition according to claim 1, 2 or 3, comprising a herbicidally effective amount of a preemergent systemic herbicide.

6. A composition according to any preceding claim, further comprising a surfactant which is chemically stable in said composition.

7. A composition according to claim 6, comprising at least about 0.05 weight percent of said surfactant.

8. A composition according to claim 6, comprising at least about 0.1 weight percent of said surfactant.

9. A composition according to any preceding claim, comprising a solid combination of said urea, sulfuric acid and systemic herbicide, in which composition said urea and sulfuric acid, in combination, constitute at least about 50 weight percent of said composition, and said systemic herbicide constitutes at least about 0.1 weight percent of said composition.

10. A composition according to any one of claims 1 to 8, comprising an aqueous solution of said urea, sulfuric acid, and systemic herbicide, in which said urea and sulfuric acid, in combination, constitute at least about 1 weight percent of said composition, and the molar ratio of said urea to said sulfuric acid is within the range of about 1/2 to about 3/2.

11. A composition according to any preceding claim, which is free of decomposition products of urea and/or sulfuric acid.

12. A composition according to any preceding claim, which is free of sulfamic acid, ammonium sulfamate and ammonium sulfate.

13. A composition according to any preceding claim, in which at least about 50 percent of said sulfuric acid is present as the monourea-sulfuric acid adduct, and wherein said urea and said sulfuric acid, in combination, constitute at least about 1 weight percent of said composition, and the molar ratio of said urea to said sulfuric acid is within the range of about 1/2 to about 3/2.

14. A solid, water-soluble, composition of matter comprising urea, sulfuric acid, and a systemic herbicide which is chemically stable in said composition, wherein said urea and sulfuric acid, in combination, constitute at least about 50 weight percent of said composition, and the molar ratio of said urea to said sulfuric acid is within the range of about 1/2 to about 3/2, so that at least about 50 weight per cent of the sulfuric acid is present as the monourea-sulfuric acid adduct.

15. A composition according to claim 14, comprising at least about 0.05 weight percent of a surfactant which is chemically stable in said composition, and a postemergent systemic herbicide which is chemically stable in said composition, wherein said urea and sulfuric acid, in combination, constitute at least about 80 weight percent of said composition, and the molar ratio of said urea to said sulfuric acid is within the range of about 1/1 to about 3/2.

16. A method for controlling the growth of vegetation which comprises contacting the vegetation with

a herbically effective amount of an aqueous solution comprising a composition in accordance with any one of claims 1 to 15.

17. A method for controlling the growth of vegetation which comprises contacting said vegetation with a herbicidally effective amount of an aqueous solution comprising urea, sulfuric acid, and a systemic herbicide, which systemic herbicide is chemically stable in said composition, wherein said urea and sulfuric acid, in combination, constitute at least about 1 weight percent of said solution, and the molar ratio of said urea to said sulfuric acid is within the range of about 1/4 to about 7/4, so that at least about 25 weight percent of the sulfuric acid is present as the monourea-sulfuric acid adduct.

18. A method according to claim 16 or 17, wherein said vegetation is contacted with said aqueous solution by applying to said vegetation (a) a urea-sulfuric acid solution in which said urea and sulfuric acid, in combination, constitute at least about 1 weight percent of said urea-sulfuric acid solution, and in which the molar ratio of said urea to said sulfuric acid is within the range of about 1/4 to about 7/4, and (b) a systemic herbicide solution comprising a herbicidally effective amount of a systemic herbicide, and allowing said urea-sulfuric acid solution and said systemic herbicide solution to mix while in contact with said vegetation to form said aqueous solution in contact with said vegetation, the proportions and compositions of said urea-sulfuric acid solution and said systemic herbicide solution being correlated with to each other to produce said aqueous solution in contact with said vegetation.

19. A method according to claim 16, 17 or 18, wherein said urea and sulfuric acid, in combination, constitute at least about 2 weight percent of said solution, the molar ratio of said urea to said sulfuric acid is within the range of about 1/2 to about 3/2, at least about 50 percent of sulfuric acid is present as the monourea-sulfuric acid adduct, and said solution is contacted with said vegetation at a dosage rate of at least about 56kg per hectare (50 pounds per acre) based on the combined dry weight of said urea and sulfuric acid.

20. A method according to any one of claims 16 to 19, wherein the molar ratio of said urea to said sulfuric acid is within the range of 1/2 to about 3/2, at least about 50 percent of said sulfuric acid is present in said solution as the monourea-sulfuric acid adduct, and said solution is contacted with said vegetation at a dosage rate of at least about 56kg per hectare (50 pounds per acre) based on said monourea-sulfuric acid adduct.

21. A method according to any one of claims 16 to 20, wherein the molar ratio of said urea to said sulfuric acid is within the range of about 1/2 to about 3/2, and said solution is contacted with said vegetation at a dosage rate corresponding to (a) at least about 56kg per hectare (50 pounds per acre) based on said urea and sulfuric acid, and (b) about 50 percent or less of the manufacturer's recommended dosage rate for said systemic herbicide.

22. A method according to claim 21, wherein said systemic herbicide comprises a postemergent systemic herbicide, and said solution comprises at least about 0.05 weight percent of a surfactant chemically stable in said solution.

23. A method according to claim 17, wherein the molar ratio of said urea to said sulfuric acid is within the range of about 1/1 to about 3/2, at least about 50 percent of said sulfuric acid is present in said solution as the monourea-sulfuric acid adduct, said solution is contacted with said vegetation at a rate of at least about 56kg per hectare (50 pounds per acre) based on said urea and sulfuric acid, said vegetation comprises (a) plants susceptible to the herbicidal activity of said monourea-sulfuric acid adduct and/or to the herbicidal activity of said systemic herbicide, and (b) plants resistant to the herbicidal activity of both said monourea-sulfuric acid adduct and said systemic herbicide, said systemic herbicide comprises a postemergent systemic herbicide selective to said susceptible plants, and said solution is essentially free of surfactant.

24. A method according to claim 17, wherein the molar ratio of said urea to said sulfuric acid is within the range of about 1/2 to about 3/2, said urea and sulfuric acid, in combination, constitute at least about 2 weight percent of said solution, said systemic herbicide comprises a preemergent systemic herbicide, and said solution is contacted with said vegetation by applying said solution to the soil at a dosage rate of at least about 56 kg per hectare (50 pounds per acre) based on the weight of said urea and sulfuric acid.

25. A method according to claim 24, wherein at least about 50 percent of said sulfuric acid is present in said solution as the monourea-sulfuric acid adduct, and said solution is applied to the soil at a dosage rate of at least about 56 kg per hectare (50 pounds per acre) based on the weight of said monourea-sulfuric acid adduct.

26. A method according to claim 24 or 25, wherein said solution is contacted with said vegetation by mixing said solution with said soil beneath the soil surface.

27. A method for controlling the growth of vegetation which method comprises contacting said vegetation with a herbicidally effective amount of a solid composition comprising urea, sulfuric acid, and a systemic herbicide which is chemically stable in said composition, wherein (a) the molar ratio of said urea to said sulfuric acid is within the range of about 1/4 to about 7/4, so that at least about 25 weight percent of said sulfuric acid is present as the monourea-sulfuric acid adduct, (b) said composition is contacted with said vegetation by applying said composition to the foliage of said vegetation and/or to the soil in the vicinity of said vegetation, and (c) said composition is contacted with water while said composition is in contact with said vegetation.

28. A method according to claim 27, wherein said urea and sulfuric acid, in combination, constitute at least about 50 weight percent of said solid composition, the molar ratio of said urea to said sulfuric acid is within the range of about 1/2 to about 3/2, and said solid composition comprises at least about 0.1 weight percent of said systemic herbicide.

29. A method according to claim 28, wherein said urea and sulfuric acid, in combination, constitute at

least about 80 weight percent of said composition, the molar ratio of said urea to said sulfuric acid is within the range of about 1/1 to about 3/2, and said composition further comprises at least about 0.1 weight percent of a surfactant chemically stable in said composition.

30. A method according to claim 28, wherein said urea and sulfuric acid, in combination, constitute at least about 80 weight percent of said composition, the molar ratio of said urea to said sulfuric acid is within the range of about 1/1 to about 3/2, and said solid composition is applied to the soil.

31. A method according to claim 30, wherein said solid composition is mixed with said soil before said composition is contacted with said water.

32. A method according to any one of claims 27 to 31, wherein said solid composition is free of sulfamic acid and/or ammonium sulfamate.

33. A method according to claim 17, for selectively controlling the growth of vegetation, wherein said systemic herbicide is a postemergent systemic herbicide, the molar ratio of said urea to said sulfuric acid is within the range of about 1/1 to about 3/2, said vegetation comprises (a) plants susceptible to the herbicidal activity of said combination of said urea and sulfuric acid and/or to the herbicidal activity of said postemergent systemic herbicide, and (b) plants resistant to the herbicidal activity of both said combination of urea and sulfuric acid and said postemergent systemic herbicide, and said solution is contacted with the foliage of said vegetation at a dosage rate sufficient to control the growth of said susceptible plants and insufficient to substantially inhibit the growth of said resistant plants.

34. A herbicidal composition comprising the monourea adduct of sulfuric acid and a systemic herbicide.

35. A method for controlling vegetation which comprises applying to said vegetation a herbicidally effective amount of the composition defined in claim 34.

## Patentansprüche

1. Herbizide Stoffzusammensetzung, dadurch gekennzeichnet, daß sie Harnstoff, Schwefelsäure und ein Systemherbizid, das in besagter Zusammensetzung chemisch stabil ist, umfaßt, wobei das Molverhältnis besagten Harnstoffs zu besagter Schwefelsäure im Bereich von etwa 1/4 bis etwa 7/4 liegt, so daß wenigstens etwa 25 Gew.-% der Schwefelsäure als Monoharnstoff-Schwefelsäure-Addukt vorliegen.

2. Zusammensetzung nach Anspruch 1, dadurch gekennzeichnet, daß besagter Harnstoff und besagte Schwefelsäure, in Kombination, wenigstens etwa 1 Gew.-% besagter Zusammensetzung ausmachen und daß das Molverhältnis von Harnstoff zu Schwefelsäure im Bereich von etwa 1/2 bis etwa 3/2 liegt.

3. Zusammensetzung nach Anspruch 2, dadurch gekennzeichnet, daß das Molverhältnis von besagtem Harnstoff zu besagter Schwefelsäure im Bereich von etwa 1/1 bis etwa 3/2 liegt.

4. Zusammensetzung nach Anspruch 1, 2 oder 3, dadurch gekennzeichnet, daß besagtes Systemherbizid ein Nachauflauf-Systemherbizid umfaßt.

5. Zusammensetzung nach Anspruch 1, 2 oder 3, gekennzeichnet durch eine herbizidwirksame Menge eines Vorauflauf-Systemherbizids.

6. Zusammensetzung nach einem der vorangehenden Ansprüche, weiter dadurch gekennzeichnet, daß sie eine oberflächenaktive Substanz umfaßt, die in besagter Zusammensetzung chemisch stabil ist.

7. Zusammensetzung nach Anspruch 6, dadurch gekennzeichnet, daß sie wenigstens etwa 0,05 Gew.-% von besagter oberflächenaktiver Substanz umfaßt.

8. Zusammensetzung nach Anspruch 6, dadurch gekennzeichnet, daß sie wenigstens etwa 0,1 Gew.-% von besagter oberflächenaktiven Substanz umfaßt.

9. Zusammensetzung nach einem der vorangehenden Ansprüche, dadurch gekennzeichnet, daß sie eine Feststoffkombination von besagtem Harnstoff, besagter Schwefelsäure und besagtem Systemherbizid umfaßt, wobei in der Zusammensetzung besagter Harnstoff und besagte Schwefelsäure, in Kombination, wenigstens etwa 50 Gew.-% besagter Zusammensetzung ausmachen und besagtes Systemherbizid wenigstens etwa 0,1 Gew.-% besagter Zusammensetzung ausmacht.

10. Zusammensetzung nach einem der Ansprüche 1 bis 8, dadurch gekennzeichnet, daß sie eine wäßrige Lösung besagten Harnstoffs, besagter Schwefelsäure und besagten Systemherbizids umfaßt, wobei besagter Harnstoff und besagte Schwefelsäure, in Kombination, wenigstens etwa 1 Gew.-% besagter Kombination ausmachen und das Molverhältnis von besagtem Harnstoff zu besagter Schwefelsäure im Bereich von etwa 1/2 bis etwa 3/2 liegt.

11. Zusammensetzung nach einem der vorangehenden Ansprüche, dadurch gekennzeichnet, daß sie frei von Zersetzungsprodukten von Harnstoff und/oder Schwefelsäure ist.

12. Zusammensetzung nach einem der vorangehenden Ansprüche, dadurch gekennzeichnet, daß sie frei von Amidoschwefelsäure, Ammoniumsulfamat und Ammoniumsulfat ist.

13. Zusammensetzung nach einem der vorangehenden Ansprüche, dadurch gekennzeichnet, daß wenigstens etwa 50% besagter Schwefelsäure als Monoharnstoff-Schwefelsäure-Addukt vorliegen und daß besagter Harnstoff und besagte Schwefelsäure, in Kombination, wenigstens etwa 1 Gew.-% besagter Zusammensetzung ausmachen und daß das Molverhältnis besagten Harnstoffs zu besagter Schwefelsäure im Bereich von etwa 1/2 bis etwa 3/2 liegt.

14. Feste, wasserlösliche Stoffzusammensetzung, dadurch gekennzeichnet, daß sie Harnstoff, Schwefelsäure und ein Systemherbizid, das in besagter Zusammensetzung chemisch stabil ist, umfaßt, wobei besagter Harnstoff und besagte Schwefelsäure, in Kombination, wenigstens etwa 50 Gew.-% besagter Zusammensetzung ausmachen und das Molverhältnis besagten Harnstoffs zu besagter

Schwefelsäure im Bereich von etwa 1/2 bis etwa 3/2 liegt, so daß wenigstens etwa 50 Gew.-% der Schwefelsäure als Monoharnstoff-Schwefelsäure-Addukt vorliegen.

15. Zusammensetzung nach Anspruch 14, dadurch gekennzeichnet, daß sie wenigstens etwa 0,05 Gew.-% einer oberflächenaktiven Substanz, die in besagter Kombination chemisch stabil ist, und ein Nachauflauf-Systemherbizid, das in besagter Zusammensetzung chemisch stabil ist, umfaßt, wobei besagter Harnstoff und besagte Schwefelsäure, in Kombination, wenigstens etwa 80 Gew.-% besagter Zusammensetzung ausmachen und das Molverhältnis von besagtem Harnstoff zu besagter Schwefelsäure im Bereich von etwa 1/1 bis etwa 3/2 liegt.

16. Verfahren zum Steuern des Pflanzenwachstums, dadurch gekennzeichnet, daß die Vegetation mit einer herbizidwirksamen Menge einer wässrigen Lösung in Kontakt gebracht wird, die eine Zusammensetzung nach einem der Ansprüche 1 bis 15 umfaßt.

17. Verfahren zum Steuern des Pflanzenwachstums, dadurch gekennzeichnet, daß die Vegetation mit einer herbizidwirksamen Menge einer wässrigen Lösung in Kontakt gebracht wird, die Harnstoff, Schwefelsäure und ein Systemherbizid umfaßt, wobei das Systemherbizid in besagter Zusammensetzung chemisch stabil ist und besagter Harnstoff und besagte Schwefelsäure, in Kombination, wenigstens etwa 1 Gew.-% besagter Lösung ausmachen und das Molverhältnis von besagtem Harnstoff zu besagter Schwefelsäure im Bereich von etwa 1/4 bis etwa 7/4 liegt, so daß wenigstens etwa 25 Gew.-% der Schwefelsäure als Monoharnstoff-Schwefelsäure-Addukt vorliegen.

18. Verfahren nach Anspruch 16 oder 17, dadurch gekennzeichnet, daß besagte Vegetation dadurch mit besagter wässriger Lösung in Kontakt gebracht wird, daß (a) eine Harnstoff-Schwefelsäure-Lösung, in der besagter Harnstoff und besagte Schwefelsäure, in Kombination, wenigstens etwa 1 Gew.-% besagter Harnstoff-Schwefelsäure-Lösung ausmachen und in der das Molverhältnis von besagtem Harnstoff zu besagter Schwefelsäure im Bereich von etwa 1/4 bis etwa 7/4 liegt, und (b) eine Systemherbizidlösung, die eine herbizidwirksame Menge eines Systemherbizids umfaßt, auf besagte Vegetation aufgebracht werden und man besagte Harnstoff-Schwefelsäure-Lösung und besagte Systemherbizidlösung sich während des Kontakts mit besagter Vegetation vermischen läßt, um besagte wässrige Lösung im Kontakt mit besagter Vegetation zu bilden, wobei die Verhältnisse und Zusammensetzungen besagter Harnstoff-Schwefelsäure-Lösung und besagter Systemherbizidlösung aufeinander abgestimmt sind, um besagte wässrige Lösung in Kontakt mit besagter Vegetation herzustellen.

19. Verfahren nach Anspruch 16, 17 oder 18, dadurch gekennzeichnet, daß besagter Harnstoff und besagte Schwefelsäure, in Kombination, wenigstens etwa 2 Gew.-% besagter Lösung ausmachen, das Molverhältnis von besagtem Harnstoff zu besagter Schwefelsäure im Bereich von etwa 1/2 bis etwa 3/2 liegt, wenigstens etwa 50% Schwefelsäure als Monoharnstoff-Schwefelsäure-Addukt vorliegen und besagte Lösung mit besagter Vegetation mit einer Dosisrate von wenigstens etwa 56 kg pro Hektar (50 Pounds pro Acre), bezogen auf das kombinierte Trockengewicht besagten Harnstoffs und besagter Schwefelsäure, in Kontakt gebracht wird.

20. Verfahren nach einem der Ansprüche 16 bis 19, dadurch gekennzeichnet, daß das Molverhältnis von besagtem Harnstoff zu besagter Schwefelsäure im Bereich von 1/2 bis etwa 3/2 liegt, wenigstens etwa 50% besagter Schwefelsäure in besagter Lösung als Monoharnstoff-Schwefelsäure-Addukt vorliegen und besagte Lösung mit besagter Vegetation mit einer Dosisrate von wenigstens etwa 56 kg pro Hektar (50 Pounds pro Acre), bezogen auf besagtes Monoharnstoff-Schwefelsäure-Addukt, in Kontakt gebracht wird.

21. Verfahren nach einem der Ansprüche 16 bis 20, dadurch gekennzeichnet, daß das Molverhältnis von besagtem Harnstoff zu besagter Schwefelsäure im Bereich von etwa 1/2 bis etwa 3/2 liegt und besagte Lösung mit besagter Vegetation mit einer Dosisrate in Kontakt gebracht wird, die (a) wenigstens etwa 56 kg pro Hektar (50 Pounds pro Acre), bezogen auf besagten Harnstoff und besagte Schwefelsäure, und (b) etwa 50% oder weniger der vom Hersteller empfohlenen Dosisrate für besagtes Systemherbizid entspricht.

22. Verfahren nach Anspruch 21, dadurch gekennzeichnet, daß besagtes Systemherbizid ein Nachauflauf-Systemherbizid umfaßt und besagte Lösung wenigstens etwa 0,05 Gew.-% einer in besagter Lösung chemisch stabilen oberflächenaktiven Substanz umfaßt.

23. Verfahren nach Anspruch 17, dadurch gekennzeichnet, daß das Molverhältnis von besagtem Harnstoff zu besagter Schwefelsäure im Bereich von etwa 1/1 bis etwa 3/2 liegt, wenigstens etwa 50% besagter Schwefelsäure in besagter Lösung als Monoharnstoff-Schwefelsäure-Addukt vorliegen, besagte Lösung mit besagter Vegetation mit einer Rate von wenigstens etwa 56 kg pro Hektar (50 Pounds pro Acre), bezogen auf besagten Harnstoff und besagte Schwefelsäure in Kontakt gebracht wird, besagte Vegetation (a) Pflanzen, die gegen die Herbizidwirkung besagten Monoharnstoff-Schwefelsäure-Addukts und/oder gegen die Herbizidwirkung besagten Systemherbizids empfindlich sind, und (b) Pflanzen, die gegenüber der Herbizidaktivität sowohl besagten Monoharnstoff-Schwefelsäure-Addukts als auch besagten Systemherbizids resistent sind, umfaßt, besagtes Systemherbizid ein Nachauflauf-Systemherbizid, das für besagte empfindliche Pflanzen selektiv ist, umfaßt und besagte Lösung im wesentlichen frei von oberflächenaktiver Substanz ist.

24. Verfahren nach Anspruch 17, dadurch gekennzeichnet, daß das Molverhältnis von besagtem Harnstoff zu besagter Schwefelsäure im Bereich von etwa 1/2 bis etwa 3/2 liegt, besagter Harnstoff und besagte Schwefelsäure, in Kombination, wenigstens etwa 2 Gew.-% besagter Lösung ausmachen, besagtes Systemherbizid ein Vorauslauf-Systemherbizid umfaßt und besagte Lösung mit besagter Vegetation dadurch in Kontakt gebracht wird, daß besagte Lösung mit einer Dosisrate von wenigstens etwa 56 kg pro Hektar (50 Pounds pro Acre), bezogen auf das Gewicht besagten Harnstoffs und besagter Schwefelsäure, auf den Boden aufgebracht wird.

25. Verfahren nach Anspruch 24, dadurch gekennzeichnet, daß wenigstens etwa 50% besagter Schwefelsäure in besagter Lösung als Monoharnstoff-Schwefelsäure-Addukt vorliegen und besagte Lösung mit einer Dosisrate von wenigstens etwa 56 kg pro Hektar (50 Pounds pro Acre), bezogen auf das Gewicht besagten Monoharnstoff-Schwefelsäure-Addukts, auf den Boden aufgebracht wird.

26. Verfahren nach Anspruch 24 oder 25, dadurch gekennzeichnet, daß besagte Lösung mit besagter Vegetation dadurch in Kontakt gebracht wird, daß besagte Lösung mit besagtem Boden unterhalb der Bodenoberfläche vermischt wird.

27. Verfahren zum Steuern des Pflanzenwachstums, dadurch gekennzeichnet, daß das Verfahren das In-Kontakt-Bringen der Vegetation mit einer herbizidwirksamen Menge einer Feststoffzusammensetzung umfaßt, die Harnstoff, Schwefelsäure und ein Systemherbizid, das in besagter Zusammensetzung chemisch stabil ist, umfaßt, wobei (a) das Molverhältnis von besagtem Harnstoff zu besagter Schwefelsäure im Bereich von etwa 1/4 bis etwa 7/4 liegt, so daß wenigstens etwa 25 Gew.-% besagter Schwefelsäure als Monoharnstoff-Schwefelsäure-Addukt vorliegen, (b) besagte Zusammensetzung mit besagter Vegetation dadurch in Kontakt gebracht wird, daß besagte Zusammensetzung auf die Blätter besagter Vegetation und/oder auf den Boden um besagte Vegetation herum aufgebracht wird, und (c) besagte Zusammensetzung mit Wasser in Kontakt gebracht wird, während besagte Zusammensetzung in Kontakt mit besagter Vegetation ist.

28. Verfahren nach Anspruch 27, dadurch gekennzeichnet, daß besagter Harnstoff und besagte Schwefelsäure, in Kombination, wenigstens etwa 50 Gew.-% besagter Feststoffzusammensetzung ausmachen, das Molverhältnis von besagtem Harnstoff zu besagter Schwefelsäure im Bereich von etwa 1/2 bis 3/2 liegt und besagte Feststoffzusammensetzung wenigstens etwa 0,1 Gew.-% besagten Systemherbizids umfaßt.

29. Verfahren nach Anspruch 28, dadurch gekennzeichnet, daß besagter Harnstoff und besagte Schwefelsäure, in Kombination, wenigstens etwa 80 Gew.-% besagter Zusammensetzung ausmachen, das Molverhältnis von besagtem Harnstoff zu besagter Schwefelsäure im Bereich von etwa 1/1 bis etwa 3/2 liegt und besagte Zusammensetzung weiterhin wenigstens etwa 0,1 Gew.-% einer in besagter Zusammensetzung chemisch stabilen oberflächenaktiven Substanz umfaßt.

30. Verfahren nach Anspruch 28, dadurch gekennzeichnet, daß besagter Harnstoff und besagte Schwefelsäure, in Kombination, wenigstens etwa 80 Gew.-% besagter Zusammensetzung ausmachen, das Molverhältnis von besagtem Harnstoff zu besagter Schwefelsäure im Bereich von etwa 1/1 bis etwa 3/2 liegt und besagte Feststoffzusammensetzung auf den Boden aufgebracht wird.

31. Verfahren nach Anspruch 30, dadurch gekennzeichnet, daß besagte Feststoffzusammensetzung mit besagtem Boden vermischt wird, bevor besagte Zusammensetzung mit besagtem Wasser in Kontakt gebracht wird.

32. Verfahren nach einem der Ansprüche 27 bis 31, dadurch gekennzeichnet, daß besagte Feststoffkombination frei von Amidoschwefelsäure und/oder Ammoniumsulfamat ist.

33. Verfahren nach Anspruch 17 zum selektiven Steuern des Pflanzenwachstums, dadurch gekennzeichnet, daß besagtes Systemherbizid ein Nachauflauf-Systemherbizid ist, das Molverhältnis von besagtem Harnstoff zu besagter Schwefelsäure im Bereich von etwa 1/1 bis etwa 3/2 liegt, besagte Vegetation (a) Pflanzen, die gegen die Herbizidwirkung besagter Kombination von besagtem Harnstoff und besagter Schwefelsäure und/oder gegen die Herbizidwirkung besagten Nachauflauf-Systemherbizids empfindlich sind, und (b) Pflanzen, die gegenüber der Herbizidwirkung sowohl besagter Kombination von Harnstoff und Schwefelsäure als auch besagten Nachauflauf-Systemherbizids resistent sind, umfaßt und besagte Lösung mit einer Dosisrate, die ausreicht, das Wachstum besagter empfindlicher Pflanzen zu steuern und nicht ausreicht, das Wachstum besagter resistenter Pflanzen wesentlich zu hemmen, mit den Blättern besagter Vegetation in Kontakt gebracht wird.

34. Herbizidzusammensetzung, dadurch gekennzeichnet, daß sie das Monoharnstoff-Addukt von Schwefelsäure und ein Systemherbizid umfaßt.

35. Verfahren zum Steuern von Vegetation, welches das Aufbringen einer herbizidwirksamen Menge der Zusammensetzung, die in Anspruch 34 definiert ist, auf besagte Vegetation umfaßt.

## Revendications

1. Une composition herbicide comprenant de l'urée, de l'acide sulfurique et un herbicide systémique qui est chimiquement stable dans ladite composition, dans laquelle le rapport molaire: urée/acide sulfurique, est compris entre environ 1/4 et environ 7/4, de sorte qu'au moins environ 25% en poids de l'acide sulfurique soit présent sous la forme d'un adduct de l'acide mono-urée sulfurique.

2. Une composition selon la revendication 1, dans laquelle cette urée et cet acide sulfurique, en association, forment au moins environ 1% en poids desdites compositions et le rapport molaire: urée/acide sulfurique, est compris entre environ 1/2 et environ 3/2.

3. Une composition selon la revendication 2, dans laquelle le rapport molaire: urée/acide sulfurique est compris entre environ 1/1 et environ 3/2.

4. Une composition selon la revendication 1, 2 ou 3, dans laquelle ledit herbicide systémique comprend un herbicide systémique agissant en post-émergence.

5. Une composition selon la revendication 1, 2 ou 3, comprenant une quantité efficace du point de vue

herbicide, d'un herbicide systémique agissant en pré-émergence.

6. Une composition selon l'une quelconque des revendications précédentes, comprenant en outre un agent tensio-actif qui est chimiquement stable dans ladite composition.

7. Une composition selon la revendication 6, comprenant au moins environ 0,05% en poids dudit agent tensio-actif.

8. Une composition selon la revendication 6, comprenant au moins environ 0,1% en poids dudit agent tensio-actif.

9. Une composition selon une quelconque revendication précédente, comprenant une combinaison solide de l'urée et de l'acide sulfurique et d'herbicide systémique précités, composition dans laquelle l'urée et l'acide sulfurique en association, forment au moins environ 50% en poids desdites compositions et l'herbicide systémique constitue au moins environ 0,1% en poids de ladite composition.

10. Une composition selon une quelconque revendication 1 à 8, comprenant une solution aqueuse d'urée et d'acide sulfurique et d'herbicide systémique, dans laquelle l'urée et l'acide sulfurique, en association, forment au moins environ 1% en poids de ladite composition et le rapport molaire urée/acide sulfurique est compris entre environ 1/2 et environ 3/2.

11. Une composition selon l'une quelconque des revendications précédentes, qui est exempte de tout produit de décomposition de l'urée et/ou de l'acide sulfurique.

12. Une composition selon l'une quelconque des revendications précédentes, qui est exempte d'acide sulfamique, de sulfamate d'ammonium et de sulfate d'ammonium.

13. Une composition selon l'une quelconque des revendications précédentes, dans laquelle au moins environ 50% de l'acide sulfurique est présent sous la forme de l'adduct de l'acide mono-urée sulfurique et dans laquelle, l'urée et l'acide sulfurique précités, en association, forment au moins environ 1% en poids desdites compositions, tandis que le rapport molaire urée/acide sulfurique est compris entre environ 1/1 et environ 3/2.

14. Une composition solide, hydro-soluble, comprenant urée, acide sulfurique et un herbicide systémique qui est chimiquement stable dans ladite composition, dans laquelle l'urée et l'acide sulfurique, en association, forment au moins environ 50% en poids de ladite composition et le rapport molaire urée/acide sulfurique est compris entre environ 1/2 et environ 3/2, de sorte qu'au moins environ 50% en poids de l'acide sulfurique soit présent sous la forme de l'adduct de l'acide mono-urée sulfurique.

15. Une composition selon la revendication 14, comprenant au moins environ 0,05% en poids d'agent tensio-actif qui est chimiquement stable dans ladite composition et un herbicide systémique agissant en post-émergence qui est chimiquement stable dans ladite composition, dans laquelle l'urée et l'acide sulfurique précités, en association, forment au moins environ 80% en poids de ladite composition et le rapport molaire urée/acide sulfurique est compris entre environ 1/1 et environ 3/2.

16. Un procédé pour contrôler la croissance de la végétation qui consiste à mettre la végétation au contact d'une quantité efficace du point de vue herbicide, d'une solution aqueuse comprenant une composition selon l'une quelconque des revendications 1 à 15.

17. Un procédé pour contrôler la croissance de la végétation qui consiste à mettre la végétation au contact d'une quantité efficace du point de vue herbicide, d'une solution aqueuse comprenant urée, acide sulfurique et un herbicide systémique, lequel herbicide systémique est chimiquement stable dans ladite composition, composition dans laquelle l'urée et l'acide sulfurique, en association, forment au moins environ 1% en poids de ladite solution et le rapport molaire urée/acide sulfurique est compris entre environ 1/4 et environ 7/4, de sorte qu'au moins environ 25% en poids de l'acide sulfurique soit présent sous la forme de l'adduct de l'acide mono-urée sulfurique.

18. Un procédé selon la revendication 16 ou 17, dans lequel ladite végétation mise au contact d'une solution aqueuse par application à la végétation: (a) d'une solution d'acide d'urée sulfurique dans laquelle l'urée et l'acide sulfurique, en association, forment au moins environ 1% en poids de ladite solution d'acide d'urée sulfurique et dans laquelle le rapport molaire urée/acide sulfurique est compris entre environ 1/4 et environ 7/4; et (b) une solution d'un herbicide systémique comprenant une quantité efficace du point de vue herbicide, d'un herbicide systémique, et en laissant la solution d'acide urée sulfurique et la solution d'herbicide systémique se mélanger lorsqu'elles sont en contact avec ladite végétation, afin de former la solution aqueuse entrant en contact avec ladite végétation, les proportions et les compositions desdites solutions d'acide urée sulfurique et de cet herbicide systémique étant liées pour que lors du contact avec ladite végétation, soit formée ladite solution aqueuse.

19. Une méthode selon la revendication 16, 17 ou 18, dans laquelle, l'urée et l'acide sulfurique, en association, forment au moins environ 2% en poids de ladite solution, rapport molaire urée/acide sulfurique étant compris entre environ 1/2 et environ 3/2, au moins environ 50% d'acide sulfurique étant présent sous la forme de l'adduct de l'acide mono-urée sulfurique et ladite solution étant mise au contact de la végétation à une dose d'au moins environ 56 kg par hectare (50 pounds per acre) exprimée par rapport au poids sec combiné de l'urée et de l'acide sulfurique.

20. Un procédé selon une quelconque revendication 16 à 19, dans lequel le rapport molaire urée/acide sulfurique est compris entre environ 1/2 et environ 3/2, au moins environ 50% de l'acide sulfurique est présent dans ladite solution, sous la forme de l'adduct de l'acide mono-urée sulfurique et ladite solution mise au contact de la végétation à une dose d'au moins environ 56 kg par hectares (50 pounds per acre) exprimée par rapport à l'adduct de l'acide mono-urée sulfurique.

21. Un procédé selon une quelconque des revendications 16 à 20, dans lequel le rapport molaire urée/acide sulfurique est compris entre environ 1/2

et environ 3/2 et ladite solution est mise au contact de la végétation à une dose correspondant à: (a) au moins environ 56 kg par hectare (50 pounds per acre) exprimée par rapport à l'urée et à l'acide sulfurique, et (b) au moins environ 50% de la dose minimum recommandée par les fabricants, dudit herbicide systémique.

22. Un procédé selon la revendication 21, dans lequel ledit herbicide systémique comprend un herbicide systémique agissant en post-émergence et ladite solution comprend au moins environ 0,05% en poids d'un agent tensio-actif chimiquement stable dans ladite solution.

23. Un procédé selon la revendication 17, dans lequel le rapport molaire urée/acide sulfurique est compris entre environ 1/1 et environ 3/2, au moins environ 50% de l'acide sulfurique est présent dans ladite solution sous la forme de l'adduct de l'acide mono-urée sulfurique, ladite solution étant mise au contact de la végétation au taux d'au moins 56 kg par hectare (50 pounds per acre) exprimé par rapport à l'urée et à l'acide sulfurique, la végétation ainsi traitée comprenant: (a) les plantes sensibles à l'activité herbicide de l'adduct de l'acide mono-urée sulfurique et/ou à l'activité herbicide dudit herbicide systémique, et (b) les plantes résistant à l'activité herbicide tant de l'adduct de l'acide de mono-urée sulfurique que de l'herbicide systémique, cet herbicide systémique comprenant un herbicide systémique agissant en post-émergence, sélectif à l'égard des plantes qui lui sont sensibles et ladite solution est essentiellement exempte d'agent tensio-actif.

24. Un procédé selon la revendication 17, dans lequel le rapport molaire urée/acide sulfurique est compris entre environ 1/2 et environ 3/2, l'urée et l'acide sulfurique précité, en association, formant au moins environ 2% en poids desdites solutions, cet herbicide systémique comprenant un herbicide systémique agissant en pré-émergence et ladite solution étant mise au contact de la végétation par application de la solution au sol, selon une dose d'au moins environ 56 kg par hectare (50 pounds per acre) exprimée par rapport au poids de l'urée et de l'acide sulfurique.

25. Un procédé selon la revendication 24, dans lequel au moins 50% de l'acide sulfurique est présent dans ladite solution est sous la forme de l'adduct de l'acide mono-urée sulfurique et la solution est appliquée au sol à une dose d'au moins environ 56 kg par hectare (50 pounds per acre) exprimée par rapport au poids de l'adduct de l'acide mono-urée sulfurique.

26. Un procédé selon la revendication 24 ou 25, dans lequel ladite solution est mise au contact de la végétation par mélange de la solution au sol en dessous de la surface du sol.

27. Un procédé pour contrôler la croissance de la végétation, ce procédé consistant à mettre la végétation au contact d'une quantité efficace du point de vue herbicide d'une composition solide comprenant, de l'urée, de l'acide sulfurique et un herbicide systémique chimiquement stable dans ladite composition, dans laquelle: (a) le rapport molaire urée/acide sulfurique est compris entre environ 1/4 et environ 7/4, de sorte qu'au moins environ 25% en poids de l'acide sulfurique soit présent sous la forme de l'adduct de l'acide mono-urée sulfurique, (b) ladite composition étant mise au contact de la végétation par application de la composition au feuillage de la végétation et/ou au sol, au voisinage de la végétation à traiter, et (c) ladite composition étant mise en contact avec de l'eau, après qu'elle ait été mise en contact avec la végétation.

28. Un procédé selon la revendication 27, dans lequel l'urée et l'acide sulfurique précités, en association, constituent au moins environ 50% en poids de ladite composition solide, le rapport molaire urée/acide sulfurique étant compris entre environ 1/2 et environ 3/2 et la composition solide comprenant au moins environ 0,1% en poids dudit herbicide systémique.

29. Un procédé selon la revendication 28, dans lequel l'urée et l'acide sulfurique précités, en association, constituent au moins environ 80% en poids desdites compositions, rapport molaire urée/acide sulfurique étant compris entre environ 1/1 et environ 3/2 et ladite composition comprenant en outre au moins environ 0,1% en poids d'un agent tensio-actif chimiquement stable dans ladite composition.

30. Un procédé selon la revendication 28, dans lequel l'urée et l'acide sulfurique précités, en association, constituent au moins environ 80% en poids de ladite composition, le rapport molaire urée/acide sulfurique étant compris entre environ 1/1 et environ 3/2 et cette composition solide étant appliquée au sol.

31. Un procédé selon la revendication 30, dans lequel la composition solide précitée est mélangée au sol préalablement au contact de ladite composition avec de l'eau.

32. Un procédé selon l'une quelconque des revendications 27 à 31, dans laquelle ladite composition solide est exempte d'acide sulfamique et/ou de sulfamate d'ammonium.

33. Un procédé selon la revendication 17, pour contrôler de façon sélective la croissance de la végétation, dans laquelle ledit herbicide systémique est un herbicide systémique agissant en post-émergence, rapport molaire urée/acide sulfurique est compris entre environ 1/1 et environ 3/2, la végétation consistant en: (a) des plantes sensibles à l'activité herbicide de ladite combinaison d'urée et d'acide sulfurique et/ou à l'activité herbicide de l'herbicide systémique agissant en post-émergence, et (b) des plantes résistant à l'activité herbicide tant de la combinaison de l'urée et d'acide sulfurique que de l'herbicide systémique agissant en poste-émergence et ladite solution étant mise en contact avec le feuillage de la végétation à traiter en une dose suffisante pour contrôler la croissance des plantes qui lui sont sensibles et insuffisante pour inhiber de façon substantielle, la croissance des plantes résistantes.

34. Une composition herbicide comprenant l'adduct de mono-urée de l'acide sulfurique et un herbicide systémique.

35. Un procédé pour contrôler la végétation qui consiste à appliquer à la végétation, une quantité efficace du produit herbicide de la composition selon la revendication 34.

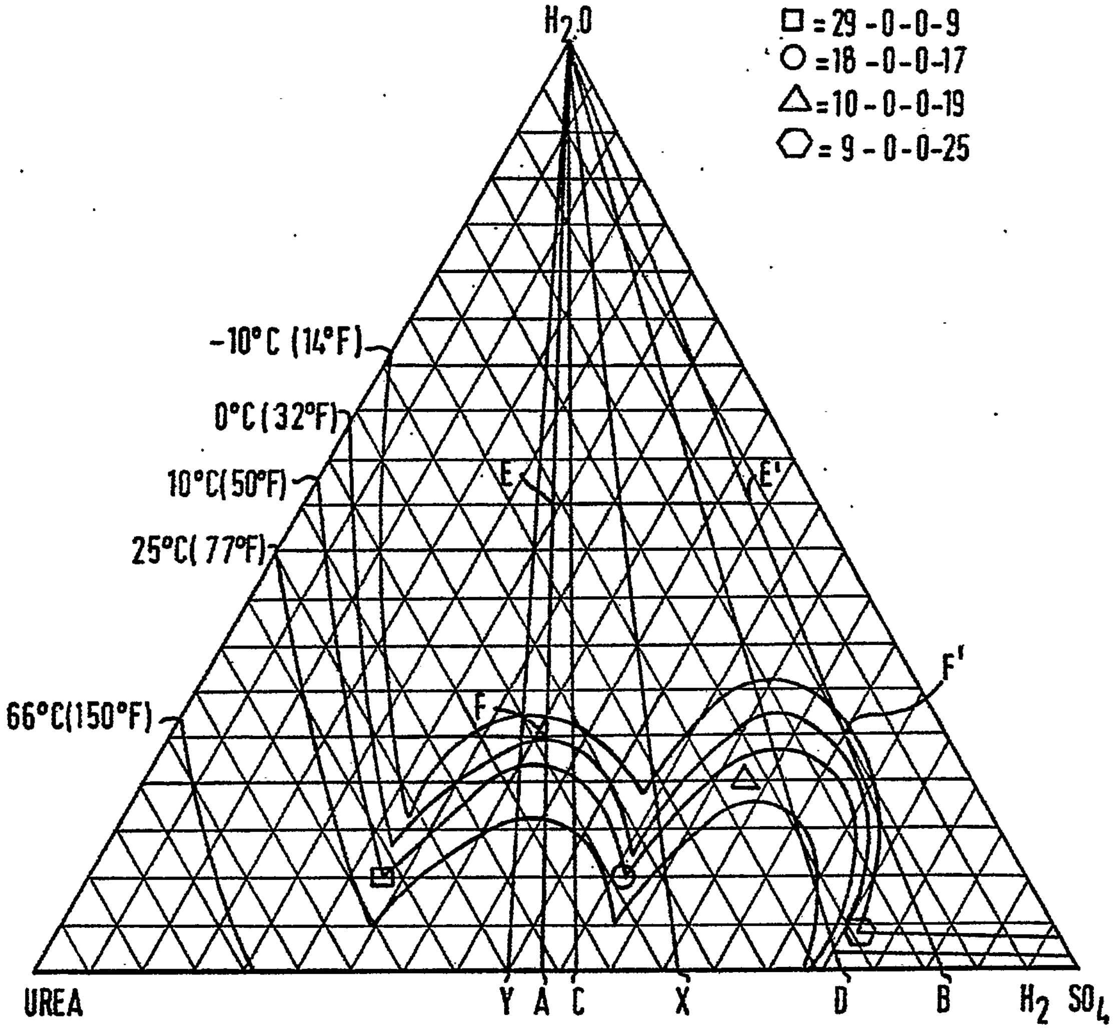
H2O
□ = 29 - 0 - 0 - 9
○ = 18 - 0 - 0 - 17
△ = 10 - 0 - 0 - 19
⬡ = 9 - 0 - 0 - 25
-10°C (14°F)
0°C (32°F)
10°C (50°F)
25°C (77°F)
66°C (150°F)
E
E'
F
F'
UREA
Y
A
C
X
D
B
H2SO4